(19)

Europäisches Patentamt

European Patent Office

Office européen des brevets

(11) EP 4 672 049 A1

(12) DEMANDE DE BREVET EUROPEEN

(43) Date de publication:
31.12.2025 Bulletin 2026/01

(51) Classification Internationale des Brevets (IPC):
G06F 21/44 (2013.01)

(21) Numéro de dépôt: 25185567.2

(52) Classification Coopérative des Brevets (CPC):
G06F 21/44

(22) Date de dépôt: 26.06.2025

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 28.06.2024 FR 2407028

(71) Demandeur: STMicroelectronics International
N.V.
1228 Plan-les-Ouates, Geneva (CH)

(72) Inventeur: PEETERS, Michael
1320 TOURINNES-LA-GROSSE (BE)

(74) Mandataire: Cabinet Beaumont
4, Place Robert Schuman
B.P. 1529
38025 Grenoble Cedex 1 (FR)

(54) **PROCÉDÉ D'AUTHENTIFICATION**

(57) La présente description concerne un procédé d'authentification (200) d'un premier dispositif (P) auprès d'un deuxième dispositif (V), comprenant les étapes successives suivantes :
- Envoyer, par ledit deuxième dispositif (V), audit premier dispositif (P), au moins une première donnée (Chall200) ;

- Utiliser, par ledit premier dispositif (P), un premier réseau de neurones pour fournir une deuxième donnée (Rsp200) à partir de ladite au moins une première donnée (Chall200) ;
- Envoyer, par ledit premier dispositif, ladite deuxième donnée (Rsp200) audit deuxième dispositif (V).

Fig 2

EP 4 672 049 A1

**Description**

<u>Domaine technique</u>

La présente description concerne de façon générale les circuits et dispositifs électroniques, et plus particulièrement la sécurité des circuits et dispositifs électroniques. La présente description se rapporte plus précisément à la mise en oeuvre d'un procédé d'authentification permettant, par exemple, à plusieurs dispositifs électroniques de démarrer une communication fiable.

<u>Technique antérieure</u>

Une communication entre deux dispositifs, ou circuits, électroniques est souvent précédée d'une phase d'authentification. Pendant cette phase, un procédé d'authentification, mis en oeuvre par les deux dispositifs, permet de vérifier si les deux dispositifs sont autorisés à communiquer ensemble.

Les procédés d'authentification sont souvent utilisés lors de communication entre un dispositif de type terminal et un équipement ou dispositif électronique de type périphérique, par exemple un consommable ou un accessoire. Le procédé d'authentification peut permettre, dans ce cas, de valider l'accès du dispositif de type périphérique aux données et/ou à des fonctionnalités du dispositif de type terminal. Le procédé d'authentification est un premier moyen de protection contre les dispositifs malveillants essayant d'accéder à des données et/ou à des fonctionnalités d'autres dispositifs.

Il serait souhaitable de pouvoir améliorer, au moins en partie, les procédés d'authentification connus.

<u>Résumé de l'invention</u>

Il existe un besoin pour des procédés d'authentification toujours plus sécurisés, et permettant une authentification plus fiable d'un circuit ou d'un dispositif électronique auprès d'un autre circuit ou dispositif électronique.

Il existe un besoin pour des circuits et dispositifs électroniques mettant en oeuvre des procédés d'authentification plus sécurisés.

Un mode de réalisation pallie tout ou partie des inconvénients des procédés d'authentification connus, et des circuits ou dispositifs mettant en oeuvre de tels procédés.

Un mode de réalisation prévoit l'utilisation de réseaux de neurones pour la mise en oeuvre d'un procédé d'authentification.

Un mode de réalisation prévoit des circuits et dispositifs adaptés à mettre en oeuvre des réseaux de neurones pour exécuter de tels procédés d'authentification.

Un mode de réalisation prévoit des procédés d'apprentissage de réseaux de neurones adaptés à la mise en oeuvre de tels procédés d'authentification.

Un mode de réalisation prévoit, en particulier, l'utilisation de réseaux de neurones permettant de reconnaitre la présence d'une caractéristique dans une donnée.

Un autre mode de réalisation prévoit, en particulier, l'utilisation de réseaux de neurones permettant de classer une donnée dans une parmi plusieurs catégories.

Un autre mode de réalisation prévoit, en particulier, l'utilisation de réseaux de neurones permettant d'extraire une donnée cachée dans une autre donnée.

Un autre mode de réalisation prévoit, en particulier, l'utilisation de réseaux de neurones permettant la génération de données aléatoires.

Un mode de réalisation prévoit un procédé d'authentification d'un premier dispositif auprès d'un deuxième dispositif, comprenant les étapes successives suivantes :

- Envoyer, par ledit deuxième dispositif, audit premier dispositif, au moins une première donnée ;
- Utiliser, par ledit premier dispositif, un premier réseau de neurones pour fournir une deuxième donnée à partir de ladite au moins une première donnée ;
- Envoyer, par ledit premier dispositif, ladite deuxième donnée audit deuxième dispositif.

Un autre mode de réalisation prévoit un dispositif électronique étant adapté à être le premier dispositif électronique dans le procédé d'authentification du premier dispositif auprès d'un deuxième dispositif, comprenant les étapes successives suivantes :

- Envoyer, par ledit deuxième dispositif, audit premier dispositif, au moins une première donnée ;
- Utiliser, par ledit premier dispositif, un premier réseau de neurones pour fournir une deuxième donnée à partir de ladite au moins une première donnée ;

- Envoyer, par ledit premier dispositif, ladite deuxième donnée audit deuxième dispositif.

Un autre mode de réalisation prévoit un dispositif électronique étant adapté à être le deuxième dispositif électronique dans le procédé d'authentification d'un premier dispositif auprès du deuxième dispositif, comprenant les étapes successives suivantes :

- Envoyer, par ledit deuxième dispositif, audit premier dispositif, au moins une première donnée ;
- Utiliser, par ledit premier dispositif, un premier réseau de neurones pour fournir une deuxième donnée à partir de ladite au moins une première donnée ;
- Envoyer, par ledit premier dispositif, ladite deuxième donnée audit deuxième dispositif.

Selon un mode de réalisation, ledit premier réseau de neurones est adapté à reconnaitre la présence d'une caractéristique dans ladite au moins une première donnée, et ladite deuxième donnée est une donnée binaire indiquant si ladite caractéristique est reconnue ou non.

Selon un mode de réalisation, ladite au moins une première donnée est choisie par un premier groupe comprenant des troisième données prétraitées par ledit premier réseau de neurones.

Selon un mode de réalisation, ladite au moins une première donnée est choisie par un deuxième groupe comprenant des quatrième données prétraitées par ledit premier réseau de neurones, ledit deuxième groupe vérifiant la formule mathématique suivante :

[Math 1]

$$\operatorname{dist}(V0, V'0) \cong \operatorname{dist} \cong \operatorname{dist}$$

dans laquelle :

- $V0$ et $V'0$ sont des données prétraitées conduisant à la première valeur de la donnée de sortie ;
- $V1$ et $V'1$ sont des données prétraitées conduisant à la deuxième valeur de la donnée de sortie ;
- dist est une fonction permettant de calculer une distance dans un espace à plusieurs dimensions comprenant les données $V0$, $V'0$, $V1$ et $V'1$ ; et
- $\cong$ est un symbole représentant une égalité relative du type "de l'ordre de".

Selon un mode de réalisation, ledit premier réseau de neurones est adapté à classer ladite au moins une première donnée selon au moins trois catégories, et ladite deuxième donnée indiquant de quelle catégorie fait partie ladite au moins une première donnée.

Selon un mode de réalisation, ladite deuxième donnée a été cachée dans ladite au moins une première donnée, et ledit premier réseau de neurones est adapté à extraire la deuxième donnée à partir de ladite au moins une première donnée.

Selon un mode de réalisation, ladite deuxième donnée a été cachée dans ladite au moins une première donnée en utilisant au moins une technique de stéganographie mise en oeuvre par un deuxième réseau de neurones.

Selon un mode de réalisation, ledit premier réseau de neurones est adapté à générer ladite deuxième donnée de façon aléatoire à partir d'au moins deux premières données comportant une cinquième donnée de génération et au moins une sixième donnée de contexte.

Selon un mode de réalisation, ledit premier dispositif envoie, en plus de ladite deuxième donnée, au moins une septième donnée de contexte différente de la sixième donnée de contexte,

ledit deuxième dispositif étant adapté à générer une huitième donnée de façon aléatoire en utilisant ladite cinquième donnée de génération et ladite au moins une septième donnée de contexte,
ledit deuxième dispositif utilisant la deuxième donnée et la huitième donnée pour vérifier si le premier dispositif est authentifié ou non auprès du deuxième dispositif.

Selon un mode de réalisation, le procédé comprend, en outre, une étape de vérification de ladite deuxième donnée par ledit deuxième dispositif permettant d'indiquer si le premier dispositif est authentifié ou non auprès du deuxième dispositif.

Selon un mode de réalisation, le procédé comprend, en outre, une étape de vérification du nombre de fois qu'une première donnée spécifique est fournie au premier dispositif.

Selon un mode de réalisation, le procédé comprend, en outre, une étape de vérification du délai de réponse du premier dispositif, mise en oeuvre par ledit deuxième dispositif.

Selon un mode de réalisation, le procédé comprend, en outre, une étape de chiffrement de la deuxième donnée avant son envoi au deuxième dispositif.

Un autre mode de réalisation prévoit un procédé d'apprentissage d'un réseau de neurones d'un premier dispositif pour la mise en oeuvre d'un procédé d'authentification décrit précédemment.

Un autre mode de réalisation prévoit un système comprenant un dispositif décrit précédemment et un dispositif décrit précédemment.

Un autre mode de réalisation prévoit un produit programme d'ordinateur comprenant des instructions de code de programme pour l'exécution des étapes du procédé décrit précédemment comme étant ledit premier dispositif, lorsque ledit programme est exécuté sur un ordinateur.

Un autre mode de réalisation prévoit un produit programme d'ordinateur comprenant des instructions de code de programme pour l'exécution des étapes du procédé décrit précédemment comme étant ledit deuxième dispositif, lorsque ledit programme est exécuté sur un ordinateur.

Selon un mode de réalisation, le premier réseau de neurones est contenu dans le premier dispositif et dans un circuit distinct d'une unité centrale de traitement du premier dispositif

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un exemple de dispositif électronique adapté à mettre en oeuvre les mode de mise en oeuvre de procédé d'authentification décrits en relation avec les figures 2 à 17 ;

la figure 2 représente un schéma bloc illustrant un mode de mise en oeuvre d'un procédé d'authentification d'un premier dispositif auprès d'un deuxième dispositif ;

la figure 3 représente un schéma bloc illustrant un mode de mise en oeuvre d'un procédé de préparation du procédé d'authentification de la figure 2 ;

la figure 4 représente un schéma bloc illustrant un autre mode de mise en oeuvre d'un procédé d'authentification d'un premier dispositif auprès d'un deuxième dispositif ;

la figure 5 représente un schéma bloc illustrant un mode de mise en oeuvre d'un procédé de préparation du procédé d'authentification de la figure 4 ;

la figure 6 représente, très schématiquement, la mise en oeuvre d'un réseau de neurones ;

la figure 7 représente un schéma bloc illustrant un autre mode de mise en oeuvre d'un procédé d'authentification d'un premier dispositif auprès d'un deuxième dispositif ;

la figure 8 représente un schéma bloc illustrant un mode de mise en oeuvre d'un procédé de préparation du procédé d'authentification de la figure 7 ;

la figure 9 représente un schéma bloc illustrant un autre mode de mise en oeuvre d'un procédé d'authentification d'un premier dispositif auprès d'un deuxième dispositif ;

la figure 10 représente un schéma bloc illustrant la mise en oeuvre d'une technique de stéganographie ;

la figure 11 représente un schéma bloc illustrant un mode de mise en oeuvre d'un procédé de préparation du procédé d'authentification de la figure 9 ;

la figure 12 représente un schéma bloc illustrant un autre mode de mise en oeuvre d'un procédé de préparation du procédé d'authentification de la figure 9 ;

la figure 13 représente un schéma bloc illustrant un autre mode de mise en oeuvre d'un procédé d'authentification d'un premier dispositif auprès d'un deuxième dispositif ;

la figure 14 représente un schéma bloc illustrant un mode de mise en oeuvre d'un procédé de préparation du procédé d'authentification de la figure 13 ;

la figure 15 représente un schéma bloc illustrant la génération de nombres aléatoires utilisant deux réseaux de neurones.

la figure 16 représente un schéma bloc illustrant un autre mode de mise en oeuvre d'un procédé d'authentification d'un premier dispositif auprès d'un deuxième dispositif ;

la figure 17 représente un schéma bloc illustrant un mode de mise en oeuvre d'un procédé de préparation du procédé d'authentification de la figure 15.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la mise en oeuvre d'un procédé d'authentification permettant d'authentifier un premier dispositif électronique auprès d'un deuxième dispositif électronique, par exemple, en vue d'une future communication entre ces premier et deuxième dispositifs. Ces modes de réalisation sont, plus particulièrement, des procédés d'authentification du type Vérificateur/Prouveur (Verifier/Prover), aussi appelé de type Vérificateur/Candidat, dans lequel un dispositif vérificateur, ici le deuxième dispositif, envoie une donnée au dispositif prouveur, ici le premier dispositif, pour qu'il lui applique une transformation. Le dispositif prouveur renvoie ensuite le résultat de ladite transformation au dispositif vérificateur pour qu'il le vérifie. Si le résultat de la vérification est correct alors le dispositif prouveur est authentifié auprès du dispositif vérificateur.

On appelle système d'authentification un système électronique comprenant un dispositif vérificateur et un dispositif prouveur.

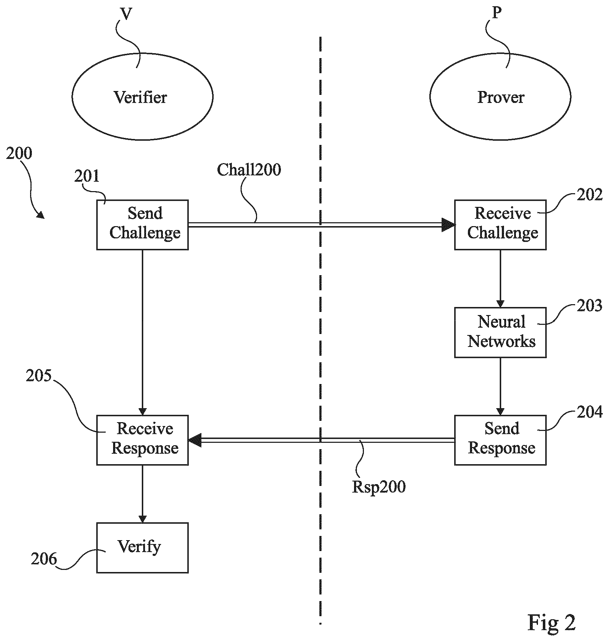

Les modes de réalisation décrits ci-après concernent plus particulièrement la mise en oeuvre d'un procédé d'authentification en utilisant au moins un réseau de neurones. Plus précisément, il est visé ici un procédé d'authentification de type Vérificateur/Prouveur dans lequel le dispositif prouveur utilise un réseau de neurones pour fournir la donnée résultat destinée au dispositif vérificateur. Pour cela le dispositif prouveur peut utiliser tout type de réseau de neurones. Il est par la suite détaillé quatre types de réseaux de neurones particulier pouvant être utilisés. Un premier type est un réseau de neurones entrainé pour vérifier si une caractéristique particulière est présente dans une donnée ou non. Un deuxième type est un réseau de neurones entrainé pour classer une donnée selon plusieurs catégories. Un troisième type est un réseau de neurones entrainé pour extraire une donnée cachée dans une autre donnée. Un quatrième type est un réseau de neurones entrainé pour générer des données aléatoires ou pseudo-aléatoires. Ces modes de réalisation sont décrits en détails en relation avec les figures 2 à 17.

De plus, les modes de réalisation décrits ci-dessus sont particulièrement adaptés pour être utilisés dans tout type de marchés industriels où une authentification entre deux dispositifs électroniques est nécessaire. Plus particulièrement, un tel procédé d'authentification peut être destiné à :

- l'industrie automobile, par exemple dans le domaine de l'électrification automobile ou dans le domaine des systèmes avancés d'aide à la conduite (Advanced Driver Assistance Systems - ADAS) ;
- le secteur industrielle, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;

- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

De plus, les modes de réalisation décrits ci-après sont tout particulièrement adaptés à tout type de systèmes dans lequel deux dispositifs électroniques nécessitent de communiquer ensemble de manière fiable. Un tel système peut être, par exemple, un système comprenant un dispositif terminal et un dispositif de type portable, ou un système comprenant un dispositif terminal et un dispositif de type consommable. Un autre exemple est un système comprenant deux dispositifs électroniques formés sur une même puce et devant communiquer de manière fiable.

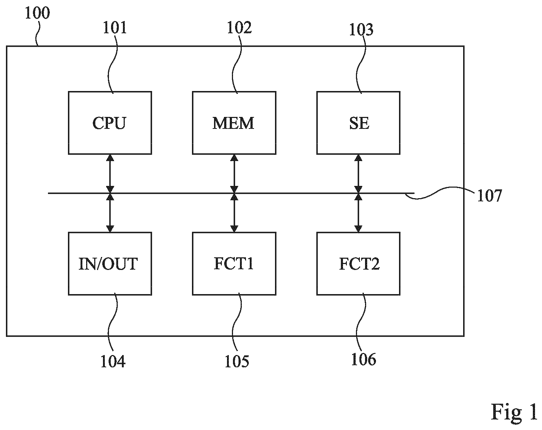

La figure 1 est un schéma bloc représentant, très schématiquement, une architecture d'un exemple d'un dispositif électronique 100 adapté à mettre en oeuvre un procédé d'authentification selon un mode de réalisation. Le dispositif 100 peut être, indifféremment, un dispositif vérificateur et/ou un dispositif prouveur dudit procédé d'authentification. Le dispositif 100 peut même former à lui seul un système d'authentification en comprenant le dispositif vérificateur et le dispositif prouveur.

Selon un exemple, le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé d'authentification, et/ou un ou plusieurs réseaux de neurones.

Selon un exemple, le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 peut être adaptée à stocker différents types de données.

Selon un exemple, le dispositif électronique 100 comprend, en outre, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé d'authentification, et/ou un ou plusieurs réseaux de neurones.

Selon un exemple, le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage. Selon un mode de réalisation, les circuits d'interface 104 sont adaptés à mettre en oeuvre un procédé d'authentification, et/ou un ou plusieurs réseaux de neurones.

Selon un exemple, le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesures, des circuits de conversion de données, etc. Selon un mode de réalisation, les circuits 105 et 106 peuvent comprendre un ou plusieurs circuits adaptés à mettre en oeuvre un procédé d'authentification et/ou un ou plusieurs réseaux de neurones. Selon un mode de réalisation particulier, les circuits 105 et 106 sont des accélérateurs et/ou des dispositifs adaptés à l'évaluation d'un ou plusieurs réseaux de neurones, et pouvant stocker une partie ou l'entièreté des paramètres (poids et biais, fonction de réponse des neurones, etc.) de ces réseaux de neurones.

Un objectif est de résister aux « clones », c'est-à-dire à des circuits similaires exécutant des logiciels piratés. Il est alors préférable que le réseau de neurones ne soit pas exclusivement logiciel mais possède au moins une partie matérielle, alors constituée d'un dispositif/circuit matériel dédié à l'évaluation du réseau de neurones. De préférence, les paramètres du réseau de neurones sont contenus dans un périphérique annexe au CPU 101, et configuré de sorte que l'extraction ou l'analyse de ces paramètres soit plus difficile que si ces mêmes paramètres étaient traités par le CPU et/ou stockés dans la mémoire MEM 102 du dispositif. Par exemple, les paramètres peuvent être stockés dans une mémoire dédiée qui supporte l'inférence de réseaux de neurones par « calcul en mémoire » (In-Memory Computing), de sorte que les paramètres du réseau ne passent pas par le CPU.

Selon un mode de réalisation particulier, les circuits 105 peuvent comprendre des circuits de mesure, des convertisseurs analogique-numérique, des circuits de calculs, etc.

Selon un exemple, le dispositif électronique 100 comprend, en outre, un ou plusieurs bus de données 107 adaptés à transférer des données entre ses différents composants.

Selon un mode de réalisation, un système d'authentification comprenant deux dispositifs du type du dispositif 100 peut être adapté à mettre en oeuvre un des procédés d'authentification selon un mode de réalisation décrits ci-après.

Selon un mode de réalisation particulier, le dispositif électronique 100 peut être un dispositif électronique complexe, comme un ordinateur, comprenant des moyens ou des instructions de code de programme permettant la mise en oeuvre des modes de mise en oeuvre du procédé d'authentification décrits ci-après, lorsque ledit programme est exécuté sur un ordinateur.

La figure 2 est un schéma bloc illustrant un mode de mise en oeuvre d'un procédé d'authentification 200 permettant d'authentifier un premier dispositif électronique P, aussi appelé dispositif prouveur P, auprès d'un deuxième dispositif électronique V, aussi appelé dispositif vérificateur V. Autrement dit, le procédé d'authentification 200 est adapté à être mis en oeuvre par un système d'authentification comprenant les dispositifs P et V. Selon un mode de réalisation, les dispositifs P et V sont du type du dispositif 100 décrit en relation avec la figure 1.

Comme décrit précédemment, le procédé d'authentification 200 est un procédé de type Vérificateur/Prouveur.

A une étape initiale 201 (Send Challenge), le procédé d'authentification 200 commence, pour cela le dispositif vérificateur V sélectionne une donnée Chall200, aussi appelée donnée de défi Chall200 (Challenge Data), ou encore challenge Chall200, pour l'envoyer au dispositif prouveur P.

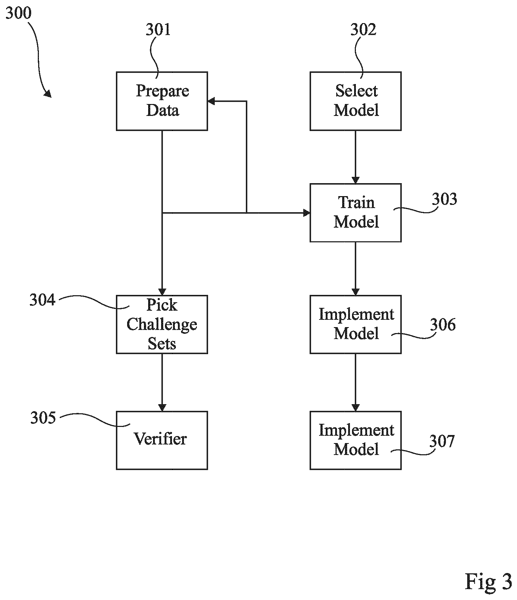

Selon un mode de réalisation, la donnée Chall200 est choisie parmi un groupe fini de données permettant de mettre en oeuvre le procédé d'authentification 200. L'ensemble de données parmi lequel la donnée Chall200 est définie plus en détails en relation avec la figure 3.

Selon un exemple, le dispositif V peut utiliser un canal de communication sécurisé pour envoyer la donnée Chall200 au dispositif P.

A une étape 202 (Receive Challenge), successive à l'étape 201, le dispositif prouveur P reçoit la donnée Chall200 et peut commencer à mettre en oeuvre le procédé d'authentification de son côté.

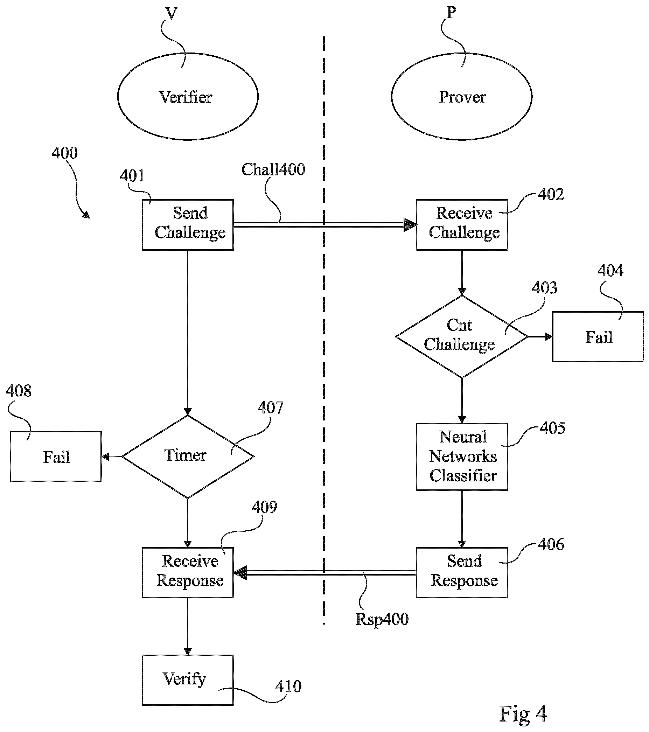

Selon un exemple, à l'étape 202, le dispositif P peut mettre en oeuvre une ou plusieurs étapes de vérification de la donnée Chall200. Selon un exemple, le dispositif P peut vérifier le nombre de fois qu'il a déjà reçu une valeur particulière de la donnée Chall200, et refuser de mettre en oeuvre le procédé d'authentification s'il a reçu la valeur particulière trop de fois. Selon un autre exemple, le dispositif P peut vérifier le format de la donnée Chall200. Un exemple d'une telle étape de vérification est décrit plus en détail en relation avec la figure 4.

A une étape 203 (Neural Networks), successive à l'étape 202, le dispositif prouveur P utilise un réseau de neurones pour fournir, ou pour générer, une donnée de réponse Rsp200 à partir de la donnée Chall200. Dans un mode de réalisation particulier, l'évaluation du réseau de neurones pour produire la donnée réponse peut utiliser les accélérateurs et/ou dispositifs dédiés à l'évaluation du réseau de neurones comme décrit à la figure 1. Dans un autre mode de réalisation, les paramètres de ce réseau de neurones (poids et biais, fonction de réponse des neurones, etc.) sont inclus dans ces dispositifs dédiés, et l'opération consiste à soumettre la donnée Chall200 à ces dispositifs dédiés pour produire la réponse Rsp200. Des exemples précis de mode de différents réseaux de neurones pouvant être utilisés ici sont décrits ci-après. La donnée de réponse Rsp peut prendre différentes formes en fonction de l'utilisation du réseau de neurones.

A une étape 204 (Send Response), le dispositif P envoie la donnée de réponse Rsp200 au dispositif V.

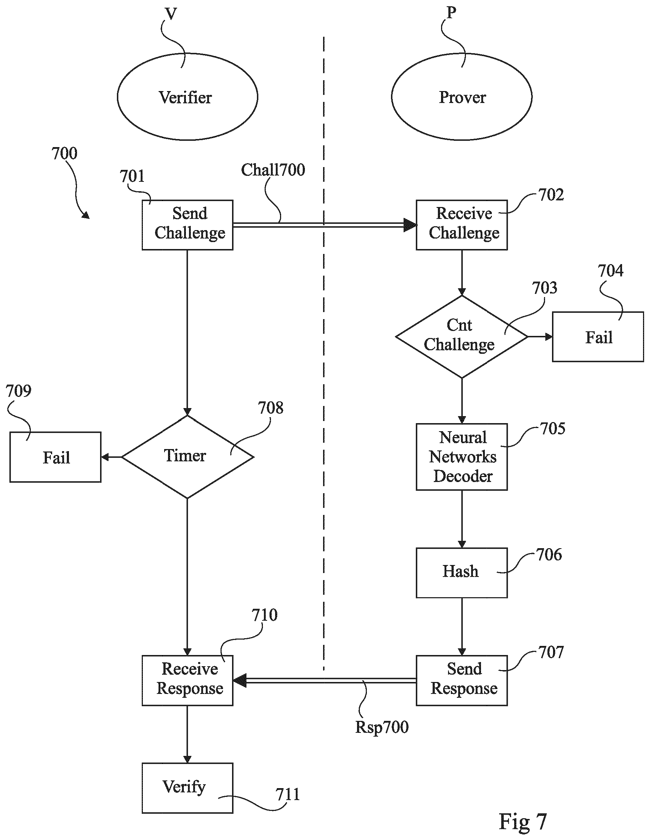

Selon un exemple, à l'étape 202, le dispositif P peut mettre en oeuvre une ou plusieurs étapes de chiffrement de la donnée Rsp200 avant son envoi au dispositif V. Selon un exemple, le dispositif P peut envoyer une signature de la donnée Rsp200 au dispositif V. Un exemple d'une telle étape de chiffrement est décrit plus en détail en relation avec la figure 7.

Selon un exemple, le dispositif P peut utiliser un canal de communication sécurisé pour envoyer la donnée de réponse Rsp200 au dispositif V.

A une étape 205 (Receive Response), successive à l'étape 204, le dispositif vérificateur V reçoit la donnée de réponse du dispositif prouveur P.

Selon un exemple, le dispositif vérificateur V peut mettre en oeuvre une ou plusieurs étapes de vérification et une ou plusieurs étapes de déchiffrement de la donnée de réponse Rsp200.

Selon un autre exemple, le dispositif vérificateur V peut, en outre, vérifier le temps de réponse du dispositif prouveur P. Une telle étape est décrite plus en détails en relation avec la figure 4.

A une étape 206 (Verify), le dispositif vérificateur V utilise la donnée de réponse Rsp200 pour conclure sur l'authentification, ou non, du dispositif prouveur P. Selon un mode de réalisation, le dispositif V peut utiliser une fonction mathématique de vérification, par exemple une fonction de comparaison, ou une fonction mathématique de vérification mise en oeuvre par un réseau de neurones.

La figure 3 est un schéma-bloc illustrant un mode de mise en oeuvre d'un procédé 300 de préparation du procédé d'authentification 200 décrit en relation avec la figure 2.

De manière générale, le procédé 300 comprend un procédé d'apprentissage du réseau de neurones utilisé par le dispositif P, et un procédé de génération d'un groupe de données parmi lequel la donnée Chall200 est choisie. Le procédé 300 comprend, en outre, la préparation des dispositifs V et P.

A une étape initiale 301 (Prepare Data), un groupe de données adaptées à servir de données d'apprentissage au réseau de neurones du dispositif P est généré. Selon un exemple, ce groupe de données peut être un groupe de données déjà existant ou un groupe de données généré en vue du procédé d'authentification 200.

A une autre étape initiale 302 (Select Model), un modèle de réseau de neurones est choisi parmi les différents modèles de réseaux de neurones existants. Cette étape peut, en outre, comprendre un calcul des paramètres adaptatifs, appelés aussi pondérations, définissant le réseau de neurones.

A une étape 303 (Train Model), successives aux étapes 301 et/ou 302, le modèle de réseaux de neurones défini à l'étape 302 est entraîné en utilisant les données du groupe de données généré à l'étape 301. Selon un exemple, le groupe de données de l'étape 301 peut être consolidé suite à cet entrainement.

A une étape 304 (Pick Challenge Sets), des données sont choisies pour former un ensemble de données utilisées pour mettre en oeuvre le procédé d'authentification 200. Pour cela, des données peuvent être générées de la même façon que les données de l'étape 301, et/ou des données peuvent être choisies parmi le groupe généré à l'étape 301, et, le cas échéant, consolidé à l'étape 303. Selon un mode de réalisation, le groupe de données formé à l'étape 304 comprend moins de données, ou dans de rares cas le même nombre de données, que le groupe de données généré à l'étape 301.

Selon une variante, l'ensemble de données est formé en appliquant une ou plusieurs opérations à des données du groupe de données de l'étape 301.

A une étape 305 (Verifier), l'ensemble de données défini à l'étape 304 est chargé, stocké, dans le dispositif V pour qu'il puisse l'utiliser afin de mettre en oeuvre le procédé d'authentification 200.

A une étape 306 (Implement Model), le réseau de neurones a terminé d'être entrainé, il peut alors être implanté dans un circuit ou un dispositif électronique.

A une étape 307 (Prover), le dispositif prouveur P est équipé du circuit ou dispositif dans lequel est implanté ledit réseau de neurones.

Ainsi, un procédé d'apprentissage du réseau de neurones du dispositif P de la figure 2 comprend les étapes suivantes :

- un groupe de données d'entrainement apte à être utilisé pour le procédé d'authentification 200 est généré ;
- un modèle de réseau de neurones est choisi ;
- ledit modèle de réseau de neurones est entrainé en utilisant les données dudit groupe de données ; et
- de manière optionnelle, ledit groupe de données est consolidé pendant la mise en oeuvre de l'entrainement du modèle.

La figure 4 est un schéma bloc illustrant un premier exemple d'un mode de mise en oeuvre d'un procédé d'authentification 400 permettant d'authentifier le dispositif prouveur P auprès du dispositif vérificateur V définis tous les deux en relation avec la figure 2.

Le procédé d'authentification 400 est un procédé de type Vérificateur/Prouveur du type du procédé d'authentification 200 décrit en relation avec la figure 2. Les éléments communs aux procédés 200 et 400 ne sont pas décrits de nouveau en détails ici. Seules les différences entre ces procédés sont mises en exergue.

Comme dit précédemment, le procédé d'authentification 200 utilise un réseau de neurones, mis en oeuvre par le dispositif prouveur P. Dans le procédé d'authentification 400, ce réseau de neurones est adapté à reconnaitre la présence, ou non, d'une caractéristique dans une donnée, et à fournir une donnée indiquant cette présence ou non. Selon un exemple, si la donnée est une image, la caractéristique pourrait être la présence ou non d'un objet particulier ou d'un animal sur cette image. Un tel réseau de neurones peut aussi être appelé un classifieur.

A une étape initiale 401 (Send Challenge), le procédé d'authentification 400 commence, pour cela le dispositif vérificateur V sélectionne une donnée Chall400 pour l'envoyer au dispositif prouveur P.

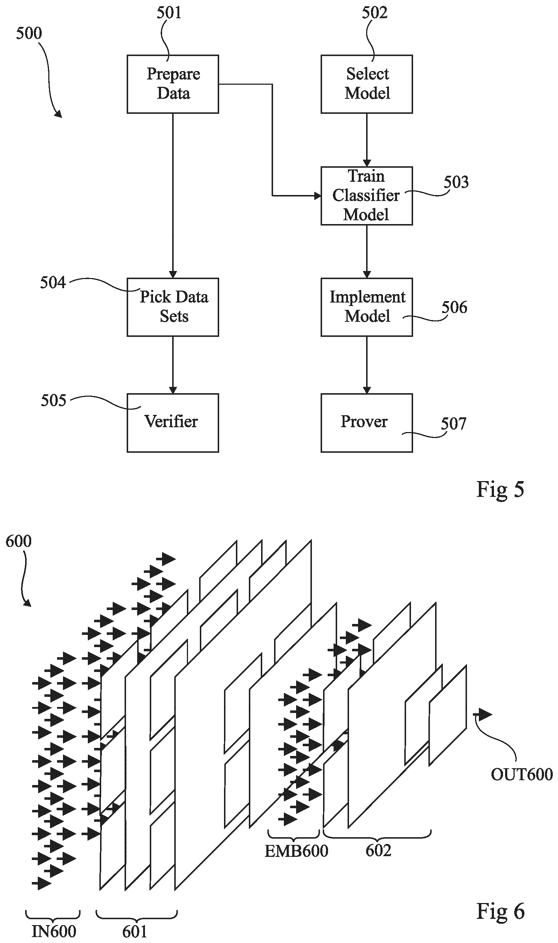

Selon un mode de réalisation, la donnée Chall400 est choisie parmi un groupe fini de données permettant de mettre en oeuvre le procédé d'authentification 400. Des exemples d'ensembles de données parmi lequel la donnée Chall400 est choisie sont définis plus en détails en relation avec les figures 5 et 6.

De plus, à chaque donnée Chall400 du groupe de données est associé une donnée de réponse Chall400Rsp représentant la valeur que le dispositif P doit fournir au dispositif V pour être authentifié.

A une étape 402 (Receive Challenge), successive à l'étape 401, le dispositif prouveur P reçoit la donnée Chall400 et peut commencer à mettre en oeuvre le procédé d'authentification de son côté.

A une étape 403 (Cnt Challenge), le dispositif P peut vérifier si la donnée Chall400 ne lui a pas déjà été envoyé trop de fois. Plus particulièrement, dans le cadre de la mise en oeuvre du procédé 400, pour chaque valeur de donnée reçu de la part d'un autre dispositif, le dispositif P incrémente un compteur. Lorsque la valeur de ce compteur atteint une valeur limite, une étape suivante est une étape 404 (Fail) où le dispositif P considère que le procédé 400 n'a pas abouti. Selon un exemple, à l'étape 404 le dispositif P peut envoyer une donnée indiquant l'abandon du procédé au dispositif V.

Si la valeur du compteur ne dépasse pas la valeur limite, l'étape suivante est une étape 405 (Neural Networks Classifier).

A l'étape 405, successive à l'étape 403, le dispositif prouveur P utilise un réseau de neurones pour fournir, ou pour générer, une donnée de réponse Rsp400 à partir de la donnée Chall400. La donnée de réponse Rsp400 est une donnée binaire représentant un bit indiquant la présence ou non d'une caractéristique dans la donnée Chall400. Ainsi, selon un mode de réalisation, la donnée de réponse Rsp400 ne peut prendre que deux valeurs, une première valeur indiquant la présence de la caractéristique, et une deuxième valeur indiquant l'absence de cette caractéristique.

A une étape 406 (Send Response), le dispositif P envoie la donnée de réponse Rsp400 au dispositif V.

A une étape 407 (Timer) mise en oeuvre suite à l'étape 401, le dispositif V vérifie le temps de réponse du dispositif P. Pour cela, dès l'envoi de la donnée Chall400, le dispositif V démarre un minuteur qu'il arrête soit lorsqu'il reçoit la donnée Rsp400 soit quand la valeur du minuteur a atteint une valeur limite. Lorsque la valeur de ce minuteur atteint une valeur limite, une étape suivante est une étape 408 (Fail) où le dispositif V considère que le procédé 400 n'a pas abouti.

Si le dispositif V reçoit la donnée Rsp400 avant que le minuteur n'atteigne la valeur limite, l'étape suivante est une étape 409 (Receive Response).

A l'étape 409, successive à l'étape 404, le dispositif vérificateur V reçoit la donnée de réponse du dispositif prouveur P.

A une étape 410 (Verify), le dispositif vérificateur V utilise la donnée de réponse Rsp400 pour conclure sur l'authentification, ou non, du dispositif prouveur P. Pour cela, le dispositif V peut, par exemple, comparer la donnée de réponse Rsp400 avec la donnée de réponse Chall400Rsp. Selon un autre exemple, à cette étape le dispositif V met en oeuvre une fonction de vérification prenant en entrée la donnée Rsp400, la donnée Chall400 et/ou Chall400Rsp.

Un avantage de ce mode de réalisation est qu'il permet d'utiliser des réseaux de neurones déjà connus dans la littérature.

La figure 5 est un schéma-bloc illustrant un mode de mise en oeuvre d'un procédé 500 de préparation du procédé d'authentification 400 décrit en relation avec la figure 4.

De manière générale, le procédé 500 comprend un procédé d'apprentissage du réseau de neurones utilisé par le dispositif P, et un procédé de génération d'un groupe de données parmi lequel la donnée Chall400 est choisie. Le procédé 500 comprend, en outre, la préparation des dispositifs V et P.

A une étape initiale 501 (Prepare Data), un groupe de données adaptés à servir de données d'apprentissage au réseau de neurones du dispositif P est généré. Selon un exemple, ce groupe de données peut être un groupe de données déjà existant ou un groupe de données généré en vue du procédé d'authentification 400.

A une autre étape initiale 502 (Select Model), un modèle de réseau de neurones permettant la détection d'une caractéristique d'une donnée est choisi parmi les différents modèles de réseaux de neurones existants. Cette étape peut, en outre, comprendre un calcul des paramètres adaptatifs, appelés aussi pondérations, définissant le réseau de neurones.

A une étape 503 (Train Model), successives aux étapes 501 et/ou 502, le modèle de réseaux de neurones défini à l'étape 502 est entrainé en utilisant les données du groupe de données généré à l'étape 501. Selon un exemple, le groupe de données de l'étape 501 peut être consolidé suite à cet entrainement, cet exemple est détaillé en relation avec la figure 6.

A une étape 504 (Pick Challenge Sets), des données sont choisies pour former un ensemble de données utilisé pour mettre en oeuvre le procédé d'authentification 400. Pour cela, des données peuvent être générées de la même façon que les données de l'étape 501, et/ou des données peuvent être choisies parmi le groupe généré à l'étape 501, et, le cas échéant, consolidé à l'étape 503. Selon un mode de réalisation, le groupe de données formé à l'étape 504 comprend moins de données, ou dans de rares cas le même nombre de données, que le groupe de données généré à l'étape 501.

A une étape 505 (Verifier), l'ensemble de données défini à l'étape 504 est chargé, stocké, dans le dispositif V pour qu'il puisse l'utiliser afin de mettre en oeuvre le procédé d'authentification 400.

A une étape 506 (Implement Model), le réseau de neurones a terminé d'être entrainé, il peut alors être implanté dans un circuit ou un dispositif électronique.

A une étape 507 (Prover), le dispositif prouveur P est équipé du circuit ou dispositif dans lequel est implanté ledit réseau de neurones.

Ainsi, un procédé d'apprentissage du réseau de neurones du dispositif P de la figure 4 comprend les étapes suivantes :

- un groupe de données d'entrainement apte à être utilisé pour le procédé d'authentification 400 est généré ;
- un modèle de réseau de neurones est choisi ;
- ledit modèle de réseau de neurones est entrainé en utilisant les données dudit groupe de données ; et
- de manière optionnelle, ledit groupe de données est consolidé pendant la mise en oeuvre de l'entrainement du modèle.

La figure 6 représente, très schématiquement, la mise en oeuvre d'un réseau de neurones 600 du type du réseau de neurones utilisé par le dispositif P dans le procédé 400 décrit en relation avec la figure 1.

Le réseau de neurones 600 est adapté à recevoir une donnée d'entrée IN600 et à fournir une donnée de sortie OUT600.

La donnée d'entrée IN600 est une donnée brute pouvant comprendre plusieurs paramètres et/ou sous-données. Selon un exemple, la donnée d'entrée IN600 peut être une donnée comprenant plusieurs bits de données, un ensemble de données binaires, un vecteur de donnée, une image comprenant plusieurs pixels, etc.

La donnée de sortie OUT600 est une donnée représentant un bit de donnée, c'est-à-dire une donnée dont la valeur ne peut prendre que deux valeurs, comme une valeur VRAI et une valeur FAUX. C'est le cas ici car le réseau de neurones 600 permet de vérifier la présence, ou non, d'une caractéristique dans la donnée d'entrée IN600. Ainsi, une première valeur que peut prendre la donnée de sortie OUT600 indique la présence de ladite caractéristique, et une deuxième valeur que peut prendre la donnée de sortie OUT600 indique l'absence de ladite caractéristique.

Pour fournir la donnée de sortie OUT600, le réseau de neurones 600 fait subir plusieurs traitements à la donnée d'entrée IN600. Plus particulièrement, le réseau de neurones 600 comprend un premier ensemble de traitements 601, aussi appelé pré-traitements 601, permettant de préparer la donnée d'entrée IN600, et un deuxième ensemble de traitements 602 permettant de fournir la donnée de sortie OUT600.

Le premier ensemble de traitements 601 permet de fournir une donnée prétraitée EMB600 au deuxième ensemble de traitements 602. La donnée prétraitée EMB600 est aussi appelée embedding. Selon un exemple, les traitements de l'ensemble 601 permettent d'adapter le format de la donnée d'entrée IN600, de réduire le bruit présent dans la donnée d'entrée IN600, de mettre en exergue les éléments importants de la donnée d'entrée IN600, etc. Autrement dit, les traitements de l'ensemble 601 permettent de fournir à l'ensemble 602 une donnée prétraitée EMB600 qui est normée, et qui est adaptée à être utilisée telle quelle par le réseau de neurones 600 pour prendre une décision. Une telle donnée prétraitée EMB6000 est aussi appelée par le terme anglais "embeddings" qui est définie dans la littérature, comme un encodage "continu" de faible dimension, il s'agit par exemple d'un vecteur de nombres réels, représentatif d'une donnée discrète, obtenue le plus souvent lors d'une phase d'apprentissage. Un "embedding", qui peut aussi constituer un ensemble de données continues, est plus adapté à la manipulation et au traitement par des réseaux de neurones.

Le deuxième ensemble de traitements 602 permet, à partir de la donnée EMB600 de fournir la donnée de résultat OUT600. Autrement dit, les traitements de l'ensemble 602 sont les couches du réseau de neurones 600 adaptées à effectivement reconnaitre la présence, ou non, de la caractéristique en question dans la donnée envoyée en entrée. Cependant, les traitements de l'ensemble 602 ne peuvent être appliqués directement à une donnée brute, d'où la nécessité de l'ensemble de traitements 601.

Lors d'une phase d'entrainement du réseau de neurones 600, il est possible de générer une grande quantité de données prétraitées du type de la donnée EMB600. Il suffit pour cela de présenter un grand nombre de données brutes au réseau de neurones 600. Il est indiqué précédemment qu'il est possible de consolider un groupe de données utilisé pour entrainer un réseau de neurones, ajouter des données prétraitées est un exemple de consolidation de ce groupe.

Selon un premier mode de réalisation, à l'étape 504, décrite en relation avec la figure 5, de choix des données utilisées pour la mise en oeuvre du procédé d'authentification 400 décrit en relation avec la figure 4, il est possible de créer un groupe composé uniquement de données prétraitées à charger dans le dispositif V. Cela peut présenter plusieurs avantages. Un premier avantage est qu'une donnée prétraitée n'est plus une donnée facilement lisible par un dispositif espion, et donc peut rendre l'observation du procédé 400 plus difficile. Un deuxième avantage est qu'il peut permettre l'utilisation d'une version tronquée d'un réseau de neurones, c'est-à-dire un réseau de neurones ne comprenant qu'un ensemble de traitements du type de l'ensemble 602. Un troisième avantage est que généralement une donnée prétraitée de type "embedding" est de plus petite dimension et donc de taille moindre qu'une donnée discrète pour être fournie à un réseau de neurones. Utiliser un tel réseau de neurones peut aussi permettre de rendre plus difficile l'utilisation de dispositif espion.

Selon un deuxième mode de réalisation, toujours à l'étape 504, il est possible de créer un groupe composé uniquement de données prétraitées à charger dans le dispositif V, et il est aussi possible de générer un groupe de données prétraitées dont l'analyse par l'ensemble 602 est plus difficile. Pour cela, il suffit de créer un groupe composé de données prétraitées très similaire mais conduisant à des données de sortie différentes. De façon mathématique, un tel groupe peut être défini comme un ensemble comprenant des données prétraitées conduisant à la première valeur de la donnée de sortie et des données prétraitées conduisant à la deuxième valeur de la donnée de sortie, et vérifiant la formule mathématique suivante :

[Math 2]

$$dist(V0, V'0) \cong dist(V1, V'1) \cong dist(V0, V1)$$

dans laquelle :

- V0 et V'0 sont des données prétraitées conduisant à la première valeur de la donnée de sortie ;
- V1 et V'1 sont des données prétraitées conduisant à la deuxième valeur de la donnée de sortie ;
- dist est une fonction permettant de calculer une distance dans un espace à plusieurs dimensions comprenant les données V0, V'0, V1 et V'1 ; et
- $\cong$ est un symbole représentant une égalité relative du type "de l'ordre de".

Un exemple de procédé de génération de deux données d'un tel groupe de données peut être le suivant :

- générer au moins une donnée D0 conduisant à la première valeur de la donnée de sortie ;

- générer au moins une donnée D1 conduisant à la deuxième valeur de la donnée de sortie ;
- générer au moins une donnée D2 en faisant la moyenne des première et deuxième données D0 et D1, en utilisant, par exemple, la fonction dist décrite précédemment ;
- déterminer si la donnée D2 conduit à la première valeur de la donnée de sortie ou à la deuxième valeur de la donnée de sortie ;
- si la donnée D2 conduit à la première valeur de la donnée de sortie, remplacer la valeur de la donnée D0 par la valeur de la donnée D2, sinon remplacer la valeur de la donnée D1 par la valeur de la donnée D2 ;
- répéter les trois dernières étapes jusqu'à ce que la distance entre les données D0 et D1 est inférieure à une distance limite, considérée comme négligeable, les données D0 et D1 peuvent alors être utilisées comme donnée pour le procédé d'authentification 400.

Ce deuxième mode de réalisation présente tous les avantages du premier mode de réalisation décrit ci-dessus, mais présente en plus l'avantage de rendre la création d'un clone plus difficile, par exemple pour un adversaire qui essayerait de dupliquer la fonction de classification effectuée par le réseau de neurones en observant seulement le contenu des données choisies à l'étape 504 décrite en relation avec la figure 5 pour former l'ensemble de données utilisé pour mettre en oeuvre le procédé d'authentification 400.

La figure 7 est un schéma bloc illustrant un deuxième exemple d'un mode de mise en oeuvre d'un procédé d'authentification 700 permettant d'authentifier le dispositif prouveur P auprès du dispositif vérificateur V définis tous les deux en relation avec la figure 2.

Le procédé d'authentification 700 est un procédé de type Vérificateur/Prouveur du type du procédé d'authentification 200 décrit en relation avec la figure 2. Les éléments communs aux procédés 200 et 700 ne sont pas décrits de nouveau en détails ici. Seules les différences entre ces procédés sont mises en exergue.

Comme dit précédemment, le procédé d'authentification 200 utilise un réseau de neurones, mis en oeuvre par le dispositif prouveur P. Dans le procédé d'authentification 700, ce réseau de neurones est adapté à classer une donnée selon plusieurs catégories, de préférence au moins trois catégories. Selon un exemple, si la donnée est une image, les catégories pourraient être la présence de différents objets particuliers, ou de différents animaux sur cette image. Un tel réseau de neurones peut aussi être appelé un classifieur.

A une étape initiale 701 (Send Challenge), le procédé d'authentification 700 commence, pour cela le dispositif vérificateur V sélectionne une donnée Chall700 pour l'envoyer au dispositif prouveur P.

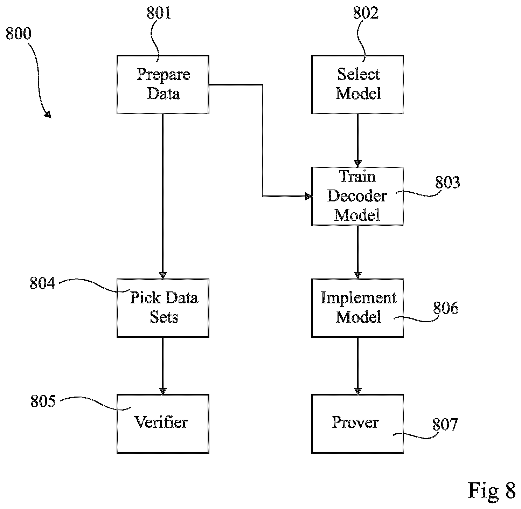

Selon un mode de réalisation, la donnée Chall700 est choisie parmi un groupe fini de données permettant de mettre en oeuvre le procédé d'authentification 700. L'ensemble de données parmi lequel la donnée Chall700 est choisie est défini plus en détails en relation avec la figure 8.

De plus, à chaque donnée Chall700 du groupe de données est associé une donnée de réponse Chall700Rsp représentant la valeur que le dispositif P doit fournir au dispositif V pour être authentifié.

A une étape 702 (Receive Challenge), successive à l'étape 701, le dispositif prouveur P reçoit la donnée Chall700 et peut commencer à mettre en oeuvre le procédé d'authentification de son côté.

A une étape 703 (Cnt Challenge), le dispositif P peut vérifier si la donnée Chall700 ne lui a pas déjà été envoyé trop de fois, en utilisant un compteur. Cette étape est similaire à l'étape 403 décrite en relation avec la figure 4. Lorsque la valeur de ce compteur atteint une valeur limite, une étape suivante est une étape 704 (Fail) où le dispositif P considère que le procédé 700 n'a pas abouti. Si la valeur du compteur ne dépasse pas la valeur limite, l'étape suivante est une étape 705 (Neural Networks Decoder).

A l'étape 705, successive à l'étape 703, le dispositif prouveur P utilise un réseau de neurones pour fournir, ou pour générer, une donnée de réponse Rsp700 à partir de la donnée Chall700. La donnée de réponse Rsp700 indique la catégorie à laquelle la donnée Chall700 fait partie. Ainsi, la donnée de réponse Rsp700 est une donnée binaire pouvant prendre au moins trois valeurs différentes, chaque valeur indiquant une catégorie. Selon un exemple, si la donnée Chall700 est une image d'animal, la donnée de réponse Rsp700 peut représenter différentes sortes d'animaux.

A une étape 706 (Hash), optionnelle, le dispositif P peut chiffrer la donnée de réponse Rsp700, par exemple en utilisant un algorithme de chiffrement, un algorithme de signature, un algorithme de hachage, etc.

A une étape 707 (Send Response), le dispositif P envoie la donnée de réponse Rsp700 au dispositif V, ou, le cas échéant, la version chiffrée de la donnée de réponse Rsp700.

A une étape 708 (Timer) mise en oeuvre suite à l'étape 701, le dispositif V vérifie le temps de réponse du dispositif P en utilisant un minuteur. L'étape 708 est similaire à l'étape 407 décrite en relation avec la figure 4. Lorsque la valeur du minuteur atteint une valeur limite, une étape suivante est une étape 709 (Fail) où le dispositif V considère que le procédé 700 n'a pas abouti. Si le dispositif V reçoit la donnée Rsp700 avant que le minuteur n'atteigne la valeur limite, l'étape suivante est une étape 710 (Receive Response).

A l'étape 710, successive à l'étape 704, le dispositif vérificateur V reçoit la donnée de réponse du dispositif prouveur P. Si la donnée Rsp700 a été chiffrée, une étape de déchiffrement peut être mise en oeuvre ici.

A une étape 711 (Verify), le dispositif vérificateur V utilise la donnée de réponse Rsp700 pour conclure sur l'authentification, ou non, du dispositif prouveur P. Pour cela, le dispositif V peut, par exemple, comparer la donnée de réponse Rsp700 avec la donnée de réponse Chall700Rsp. Selon un autre exemple, à cette étape le dispositif V met en oeuvre une fonction de vérification prenant en entrée la donnée Rsp700, la donnée Chall700, et/ou Chall700Rsp.

Un avantage de ce mode de réalisation est qu'il permet de complexifier la donnée de réponse fournie par le dispositif prouveur P. Cela rend donc le procédé d'authentification 700 plus difficile à contourner.

La figure 8 est un schéma-bloc illustrant un mode de mise en oeuvre d'un procédé 800 de préparation du procédé d'authentification 700 décrit en relation avec la figure 7.

De manière générale, le procédé 800 comprend un procédé d'apprentissage du réseau de neurones utilisé par le dispositif P, et un procédé de génération d'un groupe de données parmi lequel la donnée Chall700 est choisie. Le procédé 800 comprend, en outre, la préparation des dispositifs V et P.

A une étape initiale 801 (Prepare Data), un groupe de données adaptés à servir de données d'apprentissage au réseau de neurones du dispositif P est généré. Selon un exemple, ce groupe de données peut être un groupe de données déjà existant ou un groupe de données généré en vue du procédé d'authentification 700.

A une autre étape initiale 802 (Select Model), un modèle de réseau de neurones permettant la détection d'une caractéristique d'une donnée est choisi parmi les différents modèles de réseaux de neurones existants. Cette étape peut, en outre, comprendre un calcul des paramètres adaptatifs, appelés aussi pondérations, définissant le réseau de neurones.

A une étape 803 (Train Model), successives aux étapes 801 et/ou 802, le modèle de réseaux de neurones défini à l'étape 802 est entrainé en utilisant les données du groupe de données généré à l'étape 801. Selon un exemple, le groupe de données de l'étape 801 peut être consolidé suite à cet entrainement.

A une étape 804 (Pick Challenge Sets), des données sont choisies pour former un ensemble de données utilisé pour mettre en oeuvre le procédé d'authentification 200. Pour cela, des données peuvent être générées de la même façon que les données de l'étape 801, et/ou des données peuvent être choisies parmi le groupe généré à l'étape 801, et, le cas échéant, consolidé à l'étape 803. Selon un mode de réalisation, le groupe de données formé à l'étape 804 comprend moins de données, ou dans de rares cas le même nombre de données, que le groupe de données généré à l'étape 801.

Selon une variante de réalisation, les données choisies à l'étape 804 peuvent être des données prétraitées du même type que les données EMB600 décrites en relation avec le figure 6. Le réseau de neurones utilisé est alors du même type que celui décrit dans le cadre des figures 4 à 6.

A une étape 805 (Verifier), l'ensemble de données défini à l'étape 804 est chargé, ou stocké, dans le dispositif V pour qu'il puisse l'utiliser afin de mettre en oeuvre le procédé d'authentification 700.

A une étape 806 (Implement Model), le réseau de neurones a terminé d'être entrainé, il peut alors être implanté dans un circuit ou un dispositif électronique.

A une étape 807 (Prover), le dispositif prouveur P est équipé du circuit ou dispositif dans lequel est implanté ledit réseau de neurones.

Ainsi, un procédé d'apprentissage du réseau de neurones du dispositif P de la figure 7 comprend les étapes suivantes :

- un groupe de données d'entrainement apte à être utilisé pour le procédé d'authentification 700 est généré ;
- un modèle de réseau de neurones est choisi ;
- ledit modèle de réseau de neurones est entrainé en utilisant les données dudit groupe de données ; et
- de manière optionnelle, ledit groupe de données est consolidé pendant la mise en oeuvre de l'entrainement du modèle.

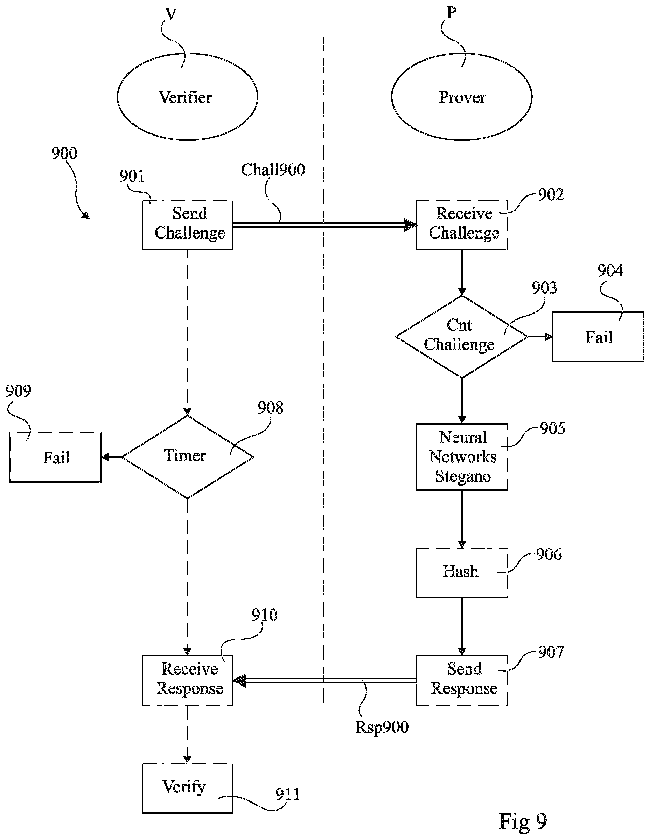

La figure 9 est un schéma bloc illustrant un troisième exemple d'un mode de mise en oeuvre d'un procédé d'authentification 900 permettant d'authentifier le dispositif prouveur P auprès du dispositif vérificateur V définis tous les deux en relation avec la figure 2.

Le procédé d'authentification 900 est un procédé de type Vérificateur/Prouveur du type du procédé d'authentification 200 décrit en relation avec la figure 2. Les éléments communs aux procédés 200 et 900 ne sont pas décrits de nouveau en détails ici. Seules les différences entre ces procédés sont mises en exergue.

Comme dit précédemment, le procédé d'authentification 200 utilise un réseau de neurones, mis en oeuvre par le dispositif prouveur P. Dans le procédé d'authentification 900, ce réseau de neurones est adapté à extraire une donnée secrète cachée dans une autre donnée. Selon un exemple, la donnée secrète est un mot binaire et l'autre donnée est une image. Plus particulièrement, la donnée secrète peut être cachée dans l'autre donnée en utilisant des techniques de stéganographie.

A une étape initiale 901 (Send Challenge), le procédé d'authentification 900 commence, pour cela le dispositif vérificateur V sélectionne une donnée Chall900 pour l'envoyer au dispositif prouveur P.

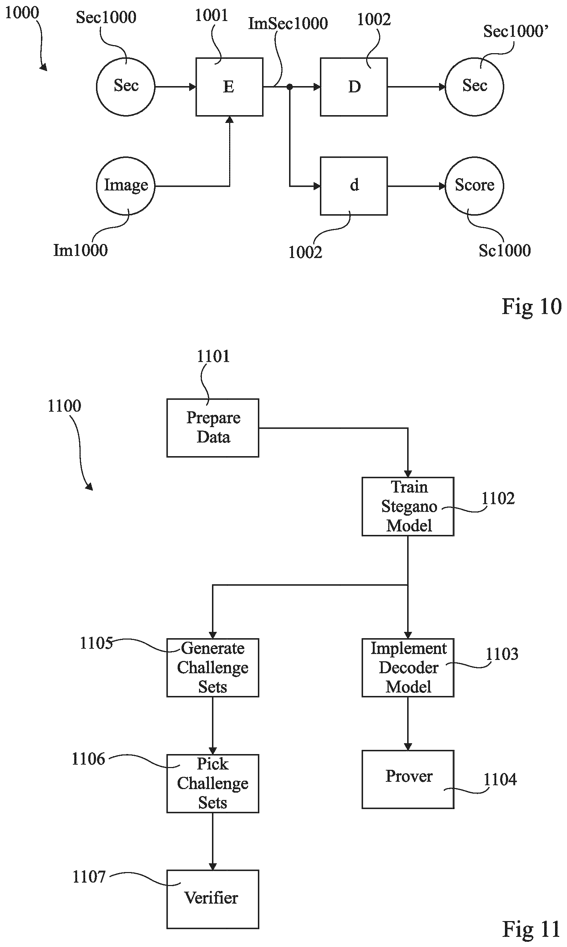

Selon un mode de réalisation, la donnée Chall900 est choisie parmi un groupe fini de données permettant de mettre en oeuvre le procédé d'authentification 900. L'ensemble de données parmi lequel la donnée Chall900 est choisie est défini plus en détails en relation avec la figure 10.

De plus, à chaque donnée Chall900 du groupe de données est associé une donnée de réponse Chall900Rsp représentant, par exemple, la valeur que le dispositif P doit fournir au dispositif V pour être authentifié.

Selon un mode de réalisation, la donnée Chall900 est ici une donnée dans laquelle une donnée secrète, correspondant, par exemple, à la donnée de réponse Chall900Rsp, est cachée. Selon un exemple particulier, la donnée Chall900 est une image dans laquelle la donnée de réponse Chall900Rsp a été cachée en utilisant des techniques de stéganographie.

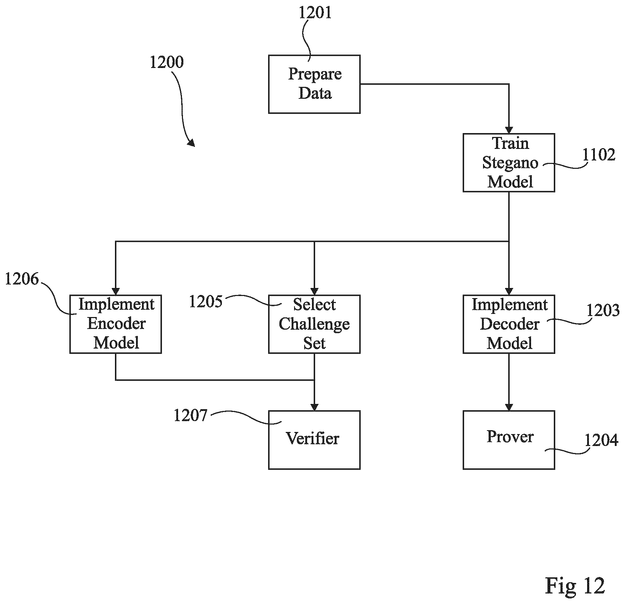

Selon une variante, en lien avec le procédé décrit en relation avec la figure 12, à l'étape 901, le dispositif V choisit la donnée Chall900, et génère la donnée secrète Chal900Rsp aléatoire correspondante. Pour cela, le dispositif V utilise un réseau de neurones de type encodeur, comme décrit ci-après, pour y implanter le secret.

A une étape 902 (Receive Challenge), successive à l'étape 901, le dispositif prouveur P reçoit la donnée Chall900 et peut commencer à mettre en oeuvre le procédé d'authentification de son côté.

A une étape 903 (Cnt Challenge), le dispositif P peut vérifier si la donnée Chall900 ne lui a pas déjà été envoyée trop de fois, en utilisant un compteur. Cette étape est similaire à l'étape 403 décrite en relation avec la figure 4. Lorsque la valeur du compteur atteint une valeur limite, une étape suivante est une étape 904 (Fail) où le dispositif P considère que le procédé 900 n'a pas abouti. Si la valeur du compteur ne dépasse pas la valeur limite, l'étape suivante est une étape 905 (Neural Networks Stegano).

A l'étape 905, successive à l'étape 903, le dispositif prouveur P utilise un réseau de neurones pour fournir, ou pour générer, une donnée de réponse Rsp900 à partir de la donnée Chall900. Le réseau de neurones s'emploie ici à retrouver la donnée cachée dans la donnée Chall900, et fournit une donnée de réponse Rsp900 correspondant à cette donnée cachée. Ainsi, la donnée de réponse Rsp900 est une donnée binaire dont le nombre de valeurs n'est limité que par son format.

A une étape 906 (Hash), optionnelle, le dispositif P peut chiffrer la donnée de réponse Rsp900, par exemple en utilisant un algorithme de chiffrement, un algorithme de signature, un algorithme de hachage, etc.

A une étape 907 (Send Response), le dispositif P envoie la donnée de réponse Rsp900 au dispositif V, ou, le cas échéant, la version chiffrée de la donnée de réponse Rsp900.

A une étape 908 (Timer) mise en oeuvre suite à l'étape 901, le dispositif V vérifie le temps de réponse du dispositif P en utilisant un minuteur. L'étape 908 est similaire à l'étape 407 décrite en relation avec la figure 4. Lorsque la valeur du minuteur atteint une valeur limite, une étape suivante est une étape 909 (Fail) où le dispositif V considère que le procédé 900 n'a pas abouti. Si le dispositif V reçoit la donnée Rsp900 avant que le minuteur n'atteigne la valeur limite, l'étape suivante est une étape 910 (Receive Response).

A l'étape 910, successive à l'étape 904, le dispositif vérificateur V reçoit la donnée de réponse du dispositif prouveur P. Si la donnée Rsp900 a été chiffrée, une étape de déchiffrement peut être mise en oeuvre ici.

A une étape 911 (Verify), le dispositif vérificateur V utilise la donnée de réponse Rsp900 pour conclure sur l'authentification, ou non, du dispositif prouveur P. Pour cela, le dispositif V peut, par exemple, comparer la donnée de réponse Rsp900 avec la donnée de réponse Chall900Rsp. Selon un autre exemple, à cette étape le dispositif V met en oeuvre une fonction de vérification prenant en entrée la donnée Rsp900, et la donnée Chall900 ou Chall900Rsp.

Un avantage de ce mode de réalisation est qu'il permet de complexifier encore plus la donnée de réponse fournie par le dispositif prouveur P. Cela rend donc le procédé d'authentification 900 plus difficile à contourner.

La figure 10 est un schéma bloc illustrant la mise en oeuvre d'une technique de stéganographie 1000 utilisant des réseaux de neurones.

La technique 1000 utilise trois réseaux de neurones parmi lesquels :

- un réseau de neurones 1001 (E) jouant le rôle d'encodeur, appelé ci-après encodeur 1001 ;
- un réseau de neurones 1002 (D) jouant le rôle de décodeur, appelé ci-après décodeur 1002 ; et
- un réseau de neurones 1002 (D) jouant le rôle de déterminant, appelé ci-après déterminant 1002.

L'encodeur 1001 est adapté à recevoir deux données parmi lesquelles une donnée secrète Sec1000 et une donnée Im1000 dans laquelle est cachée la donnée secrète. Selon un exemple, la donnée Im1000 est une image comprenant plusieurs pixels disposés sous forme de matrice. Selon un exemple, la donnée Im1000 est une image naturelle, c'est-à-dire une image qui n'a subi aucun prétraitement. Des exemples de données pouvant être utilisés sont donnés dans l'article "Zhang, Kevin Alex and Cuesta-Infante, Alfredo and Veeramachaneni, Kalyan, "SteganoGAN: High Capacity Image Steganography with GANs", MIT EECS, January 2019", et dans l'article "Varsha Kishore, Xiangyu Chen, Yan Wang, Boyi Li, Kilian Q Weinberger, "Fixed Neural Network Steganography: Train the images, not the network", ICLR 2022, January 2022". L'encodeur 1001 est entraîné pour cacher la donnée secrète Sec1000 dans la donnée Im1000 et pour fournir une nouvelle donnée ImSec1000 de même format que la donnée Im1000.

Le décodeur 1002 est adapté à recevoir la donnée ImSec1000 et à y retrouver la donnée secrète Sec1000.

Le déterminant 1003 est adapté à déterminer si la donnée secrète Sec1000 est cachée de façon efficace dans la donnée ImSec1000. Pour cela, le déterminant 1003 essaye de trouver la donnée secrète Sec1000 dans la donnée ImSec1000 et définit un score permettant d'évaluer le travail de l'encodeur. Ce score peut être utilisé dans une phase d'entrainement de l'encodeur 1001.

La figure 11 est un schéma-bloc illustrant un mode de mise en oeuvre d'un procédé 1100 de préparation du procédé d'authentification 900 décrit en relation avec la figure 9. Ce procédé de préparation 1100 est un premier exemple de procédé de préparation possible, un deuxième exemple est décrit en relation avec la figure 12.

De manière générale, le procédé 1100 comprend un procédé d'apprentissage du réseau de neurones utilisé par le dispositif P, et un procédé de génération d'un groupe de données parmi lequel la donnée Chall900 est choisie. Le procédé 1100 comprend, en outre, la préparation des dispositifs V et P.

A une étape initiale 1101 (Prepare Data), un groupe de données adaptées à servir de données d'apprentissage au réseau de neurones du dispositif P est généré. Selon un exemple, ce groupe de données peut être un groupe de données déjà existant ou un groupe de données généré en vue du procédé d'authentification 900. Ce groupe de données comprend donc des données dans lesquelles des données secrètes peuvent être cachées mais dans lesquelles aucune donnée secrète n'a été cachée pour le moment.

A une étape 1102 (Train Stegano Model), successive à l'étape 1101, un réseau de neurones de type encodeur, du type de l'encodeur 1001 de la figure 10, et un réseau de neurones de type décodeur, du type du décodeur 1002 de la figure 10, sont entrainés en utilisant les données du groupe de données sélectionné à l'étape 1101. Plus particulièrement, ces réseaux de neurones utilisés peuvent être entrainés en utilisant la technique décrite en relation avec la figure 10.

A une étape 1103 (Implement Decoder Model), le réseau de neurones de type décodeur a terminé d'être entrainé, il peut alors être implanté dans un circuit ou un dispositif électronique.

A une étape 1104 (Prover), le dispositif prouveur P est équipé du circuit ou dispositif dans lequel est implanté ledit réseau de neurones.

A une étape 1105 (Generate Challenge Sets), un groupe de données dans lesquelles sont cachées des données secrètes est constitué en utilisant, par exemple, un réseau de neurones de type encodeur entrainé en même temps que le réseau de neurones de type décodeur dont est équipé le dispositif P à l'étape 1104. Selon un exemple, le réseau de neurones de type encodeur est ensuite supprimé.

A une étape 1106 (Pick Challenge Sets), des données sont choisies pour former un ensemble de données utilisé pour mettre en oeuvre le procédé d'authentification 900. Selon un mode de réalisation, le groupe de données formé à l'étape 1106 comprend moins de données, ou dans de rares cas le même nombre de données, que le groupe de données généré à l'étape 1105.

A une étape 1107 (Verifier), l'ensemble de données défini à l'étape 1106 est chargé, stocké, dans le dispositif V pour qu'il puisse l'utiliser afin de mettre en oeuvre le procédé d'authentification 900.

Ainsi, un procédé d'apprentissage du réseau de neurones du dispositif P de la figure 9 comprend les étapes suivantes :

- des données d'entrainement sont générées ; et
- des réseaux de neurones de type encodeur et décodeur sont entrainés en utilisant les données d'entrainement en utilisant, par exemple, la technique de stéganographie 1000 décrite en relation avec la figure 10.

La figure 12 est un schéma-bloc illustrant un mode de mise en oeuvre d'un procédé 1200 de préparation du procédé d'authentification 900 décrit en relation avec la figure 9. Ce procédé de préparation 1200 est un deuxième exemple de procédé de préparation possible.

De manière générale, le procédé 1200 comprend un procédé d'apprentissage du réseau de neurones utilisé par le dispositif P, et un procédé de génération d'un groupe de données parmi lequel la donnée Chall900 est choisie. Le procédé 1200 comprend, en outre, la préparation des dispositifs V et P.

A une étape initiale 1201 (Prepare Data), un groupe de données adaptés à servir de données d'apprentissage au réseau de neurones du dispositif P est généré. Selon un exemple, ce groupe de données peut être un groupe de données déjà existant ou un groupe de données généré en vue du procédé d'authentification 900. Ce groupe de données comprend donc des données dans lesquelles des données secrètes peuvent être cachées mais dans lesquelles aucune donnée secrète n'a été cachée pour le moment.

A une étape 1202 (Train Stegano Model), successive à l'étape 1201, un réseau de neurones de type encodeur, du type de l'encodeur 1001 de la figure 10, et un réseau de neurones de type décodeur, du type du décodeur 1002 de la figure 10, sont entrainés en utilisant les données du groupe de données généré à l'étape 1201. Plus particulièrement, ces réseaux de neurones utilisés peuvent être entrainés en utilisant la technique décrite en relation avec la figure 10.

A une étape 1203 (Implement Decoder Model), le réseau de neurones de type décodeur a terminé d'être entrainé, il peut alors être implanté dans un circuit ou un dispositif électronique.

A une étape 1204 (Prover), le dispositif prouveur P est équipé du circuit ou dispositif dans lequel est implanté ledit réseau de neurones de type décodeur.

A une étape 1205 (Select Challenge Set), un groupe de données est sélectionné dans lequel il est possible de cacher des données secrètes, par exemple une partie du groupe établi à l'étape 1201 ou bien un nouveau groupe de données.

A une étape 1206 (Implement Encoder Model), le réseau de neurones de type encodeur a terminé d'être entrainé, il peut alors être implanté dans un circuit ou un dispositif électronique.

A une étape 1207 (Verifier), le dispositif vérificateur V est équipé du circuit ou dispositif dans lequel est implanté ledit réseau de neurones de type encodeur. Ainsi, à chaque démarrage du procédé d'authentification 900, le dispositif vérificateur P peut générer une donnée de challenge en utilisant une donnée secrète et l'image associé du groupe de données généré à l'étape 1205.

Ainsi, un procédé d'apprentissage du réseau de neurones de type encodeur du dispositif V, et du réseau de neurones de type décodeur du dispositif P de la figure 9 comprend les étapes suivantes :

- des données d'entrainement sont générées ; et
- des réseaux de neurones de type encodeur et décodeur sont entrainés en utilisant les données d'entrainement en utilisant, par exemple, la technique de stéganographie 1000 décrite en relation avec la figure 10.

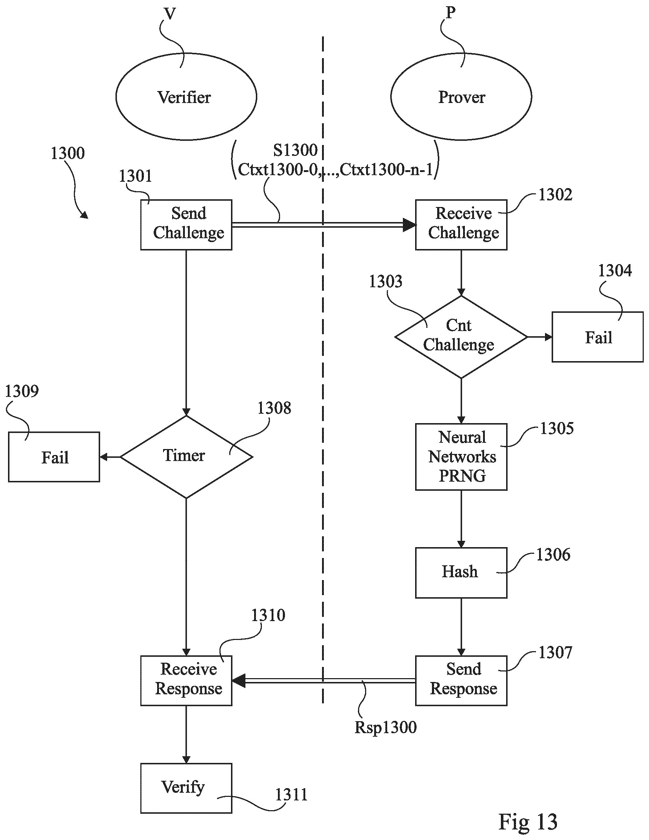

La figure 13 est un schéma bloc illustrant un quatrième exemple d'un mode de mise en oeuvre d'un procédé d'authentification 1300 permettant d'authentifier le dispositif prouveur P auprès du dispositif vérificateur V définis tous les deux en relation avec la figure 2.

Le procédé d'authentification 1300 est un procédé de type Vérificateur/Prouveur du type du procédé d'authentification 200 décrit en relation avec la figure 2. Les éléments communs aux procédés 200 et 1300 ne sont pas décrits de nouveau en détails ici. Seules les différences entre ces procédés sont mises en exergue.

Comme dit précédemment, le procédé d'authentification 200 utilise un réseau de neurones, mis en oeuvre par le dispositif prouveur P. Dans le procédé d'authentification 1300, ce réseau de neurones est adapté à générer une donnée aléatoire ou pseudo-aléatoire à partir d'une donnée "graine" (seed) et d'une ou plusieurs données de contexte.

A une étape initiale 1301 (Send Challenge), le procédé d'authentification 1300 commence, pour cela le dispositif vérificateur V sélectionne une donnée "graine" S1300, ou donnée de génération S1300, et une ou plusieurs données de contexte Ctxt1300-0, ..., Ctxt1300-n-1 pour l'envoyer au dispositif prouveur P. Dans l'exemple de la figure 13, le dispositif V envoie n données de contexte, n étant un entier naturel.

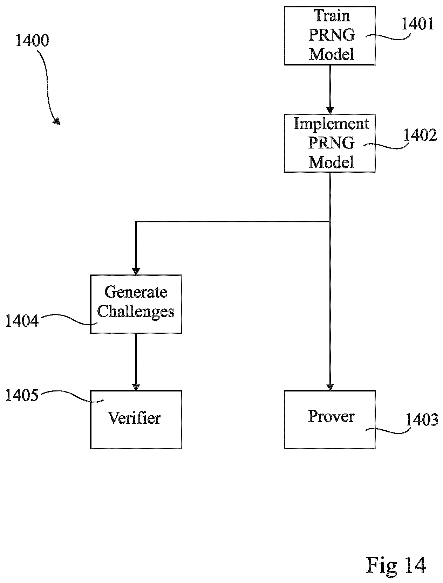

Selon un mode de réalisation, les données S1300 et Ctxt1300-0, ..., Ctxt1300-n-1 sont choisies parmi un groupe fini de données permettant de mettre en oeuvre le procédé d'authentification 1300. L'ensemble de données parmi lequel les données S1300 et Ctxt1300-0, ..., Ctxt1300-n-1 sont choisis est défini plus en détails en relation avec la figure 14. Dans la suite de la description, on appelle couple un ensemble de données comprenant une donnée "graine" et une ou plusieurs données de contexte.

De plus, à chaque couple de données S1300 et Ctxt1300-0, ..., Ctxt1300-n-1 du groupe de données est associé une donnée de réponse Chall1300Rsp représentant la valeur aléatoire que le dispositif P doit fournir au dispositif V pour être authentifié.

A une étape 1302 (Receive Challenge), successive à l'étape 1301, le dispositif prouveur P reçoit les données S1300 et Ctxt1300-0, ..., Ctxt1300-n-1 et peut commencer à mettre en oeuvre le procédé d'authentification de son côté.

A une étape 1303 (Cnt Challenge), le dispositif P peut vérifier si le couple de données S1300 et Ctxt1300-0, ..., Ctxt1300-n-1 ne lui a pas déjà été envoyé trop de fois, en utilisant un compteur. Cette étape est similaire à l'étape 403 décrite en relation avec la figure 4. Lorsque la valeur du compteur atteint une valeur limite, une étape suivante est une étape 1304 (Fail) où le dispositif P considère que le procédé 1300 n'a pas abouti. Si la valeur du compteur ne dépasse pas la valeur limite, l'étape suivante est une étape 1305 (Neural Networks PRNG).

A l'étape 1305, successive à l'étape 1303, le dispositif prouveur P utilise un réseau de neurones pour fournir, ou pour générer, une donnée de réponse Rsp1300 à partir des données S1300 et Ctxt1300-0, ..., Ctxt1300-n-1. Le réseau de neurones s'emploie ici à générer un nombre aléatoire à partir de la donnée "graine" S1300 et des données de contexte Ctxt1300-0, **...,** Ctxt1300-n-1. Ainsi, la donnée de réponse Rsp1300 est une donnée binaire dont le nombre de valeurs n'est limité que par son format.

A une étape 1306 (Hash), optionnelle, le dispositif P peut chiffrer la donnée de réponse Rsp1300, par exemple en utilisant un algorithme de chiffrement, un algorithme de signature, un algorithme de hachage, etc.

A une étape 1307 (Send Response), le dispositif P envoie la donnée de réponse Rsp1300 au dispositif V, ou, le cas échéant, la version chiffrée de la donnée de réponse Rsp1300.

A une étape 1308 (Timer) mise en oeuvre suite à l'étape 1301, le dispositif V vérifie le temps de réponse du dispositif P en utilisant un minuteur. L'étape 1308 est similaire à l'étape 407 décrite en relation avec la figure 4. Lorsque la valeur du minuteur atteint une valeur limite, une étape suivante est une étape 1309 (Fail) où le dispositif V considère que le procédé 1300 n'a pas abouti. Si le dispositif V reçoit la donnée Rsp1300 avant que le minuteur n'atteigne la valeur limite, l'étape suivante est une étape 1310 (Receive Response).

A l'étape 1310, successive à l'étape 1304, le dispositif vérificateur V reçoit la donnée de réponse du dispositif prouveur P. Si la donnée Rsp1300 a été chiffrée, une étape de déchiffrement peut être mise en oeuvre ici.

A une étape 1311 (Verify), le dispositif vérificateur V utilise la donnée de réponse Rsp1300 pour conclure sur l'authentification, ou non, du dispositif prouveur P. Pour cela, le dispositif V peut, par exemple, comparer la donnée de réponse Rsp1300 avec la donnée de réponse Chall1300Rsp. Selon un autre exemple, à cette étape le dispositif V met en oeuvre une fonction de vérification prenant en entrée la donnée Rsp1300, et la donnée Chall1300 ou Chall1300Rsp.

Un avantage de ce mode de réalisation est qu'il permet de complexifier encore plus la donnée de réponse fournie par le dispositif prouveur P. Cela rend donc le procédé d'authentification 1300 plus difficile à contourner.

La figure 14 est un schéma-bloc illustrant un mode de mise en oeuvre d'un procédé 1400 de préparation du procédé d'authentification 1300 décrit en relation avec la figure 13.

De manière générale, le procédé 1400 comprend un procédé d'apprentissage du réseau de neurones utilisé par le dispositif P, et un procédé de génération d'un groupe de données parmi lequel les données S1300 et Ctxt1300-0, ..., Ctxt1300-n-1 sont choisies. Le procédé 1400 comprend, en outre, la préparation des dispositifs V et P.

A une étape initiale 1401 (Train PRNG Model), un réseau de neurones de type générateur de nombres aléatoires ou pseudo-aléatoires est entrainé. Il existe plusieurs techniques permettant d'entrainer un réseau de neurones pour qu'il génère un nombre aléatoire.

Un premier exemple de technique consiste en calquer le comportement d'un réseau de neurones sur celui d'un générateur de nombres aléatoires ou pseudo-aléatoires réel. Pour cela, on configure un tel générateur avec des données de contexte et on lui fournit une donnée "graine". On fournit également cette donnée "graine" et ces données de contexte au réseau de neurones. Les nombres générés par le générateur et par le réseau de neurones sont comparés par un autre réseau de neurones de type discriminateur. Le réseau de neurones de type discriminateur ajuste les pondérations du réseau de neurones de type générateur pour que son fonctionnement ressemble de plus en plus à celui du générateur réel.

Un deuxième exemple de technique consiste en l'utilisation d'un réseau de neurones de type générateur de nombres aléatoires ou pseudo-aléatoires et un réseau de neurones de type prédicteur. Le réseau de neurones de type générateur est amélioré jusqu'à ce que le réseau de neurones prédicteur ne soit plus capable de prédire les données de sortie du réseau de neurones de type générateur.

D'autres exemples de technique d'entrainement d'un réseau de neurones pour la génération de nombres aléatoires ou pseudo-aléatoires sont à la portée de la personne du métier.

A une étape 1402 (Implement PRNG Model), le réseau de neurones de type générateur de nombres aléatoires ou pseudo-aléatoires a terminé d'être entrainé, il peut alors être implanté dans un circuit ou un dispositif électronique.

A une étape 1403 (Prover), le dispositif prouveur P est équipé du circuit ou dispositif dans lequel est implanté ledit réseau de neurones de type générateur de nombres aléatoires ou pseudo-aléatoires.

A une étape 1404 (Generate Challenges), un groupe de données permettant de mettre en oeuvre le procédé d'authentification 1300 est constitué. Pour cela, le réseau de neurones de type générateur de nombres aléatoires ou pseudo-aléatoires entrainé à l'étape 1402 est utilisé. Plusieurs couples de donnée "graine" et de données de contexte sont générés, et utilisés pour générer des données aléatoires ou pseudo aléatoires par le réseau de neurones. Ces couples de données et les données pseudo aléatoires qu'ils permettent de générer forment le groupe de données permettant de mettre en oeuvre le procédé d'authentification 1300. Une fois ce groupe généré et l'étape 1403 terminée, le réseau de neurones de type générateur de nombres aléatoires ou pseudo-aléatoires peut être supprimé.

A une étape 1405 (Verifier), le groupe de données généré à l'étape 804 est chargé, stocké, dans le dispositif V pour qu'il puisse l'utiliser afin de mettre en oeuvre le procédé d'authentification 1300.

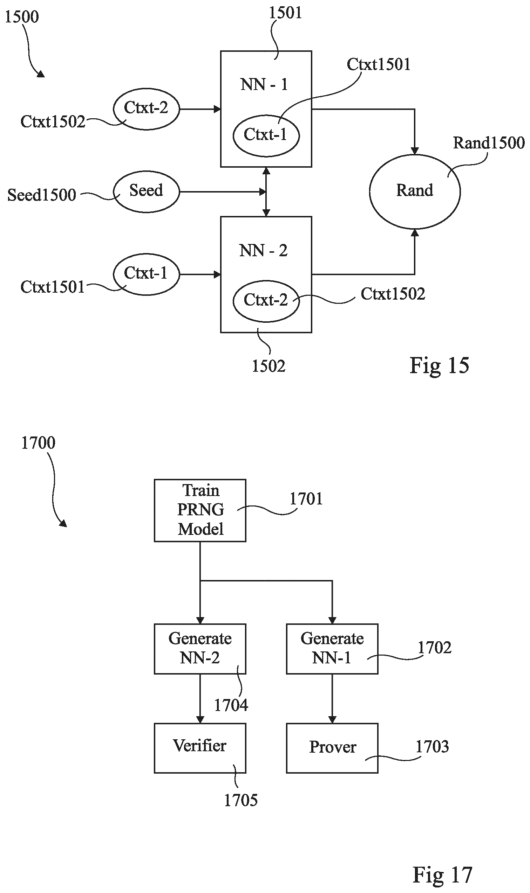

La figure 15 est un schéma bloc illustrant un exemple de mise en oeuvre d'un procédé 1500 de génération de nombre aléatoire ou pseudo-aléatoire utilisant deux réseaux de neurones 1501 (NN-1) et 1502 (NN-2).

Comme décrit précédemment, un réseau de neurones entrainé pour générer des données aléatoires reçoit généralement en entrée une donnée "graine" et une ou plusieurs données de contexte, de préférence plusieurs données de contexte. En vue de la mise en oeuvre d'un procédé d'authentification, il est possible de "diviser" un réseau de neurones en plusieurs réseaux de neurones, par exemple deux réseaux de neurones ayant, par exemple, au moins une partie commune, permettant de générer la même donnée aléatoire ou une même séquence de données aléatoires en prenant en entrée la même donnée "graine" et des données de contexte différentes.

Plus particulièrement, le procédé 1500 utilise deux réseaux de neurones 1501 et 1502 issus d'un même réseau de neurones initial (non représenté en figure 15) adapté à générer une donnée aléatoire. On considère ici que le réseau de neurones initial prend en entrée une donnée "graine" Sedd1500 et n données de contexte Ctxt1500-0,..., Ctxt1500-n-1, n étant défini en relation avec la figure 13. Les deux réseaux de neurones 1501 et 1502 sont obtenus en intégrant directement certaines données de contexte dans le réseau de neurones initial. Selon un exemple, les deux réseaux de neurones 1501 et 1502 peuvent avoir une partie commune, comme cela est explicité par la suite.

Plus précisément, le réseau de neurones 1501 est obtenu en écrivant en dur une partie Ctxt1501 (Ctxt-1) des données de contexte Ctxt1500-0,..., Ctxt1500-n-1, par exemple p données de contexte Ctxt1500-0,..., Ctxt1500-p-1, p étant un entier compris entre 0 et n-1. L'expression "écrire en dur" signifie ici que la partie Ctxt1501 des données de contexte est directement inscrite dans le code du réseau de neurones 1501. De façon similaire, le réseau de neurones 1502 est obtenu en écrivant en dur une partie Ctxt1502 (Ctxt-2) des données de contexte Ctxt1500-0,..., Ctxt1500-n-1, par exemple n-p données de contexte Ctxt1500-p, ... , Ctxt1500-n-1. Selon un mode de réalisation, l'union des parties Ctxt1501 et Ctxt1502 est égale aux n données de contexte Ctxt1500-0,..., Ctxt1500-n-1. Dit d'une autre façon, on dit que les parties Ctxt1501 et 1502 sont complémentaires, et que les réseaux de neurones 1501 et 1502 sont complémentaires.

Ainsi, pour obtenir une même donnée aléatoire Rand1500 en utilisant les réseaux de neurones 1501 et 1502, il suffit de fournir :

- la donnée "graine" Seed1500 à chaque réseau de neurones 1501, 1502 ;
- la partie Ctxt1502 au réseau de neurones 1501 ; et
- la partie Ctxt1501 au réseau de neurones 1502.

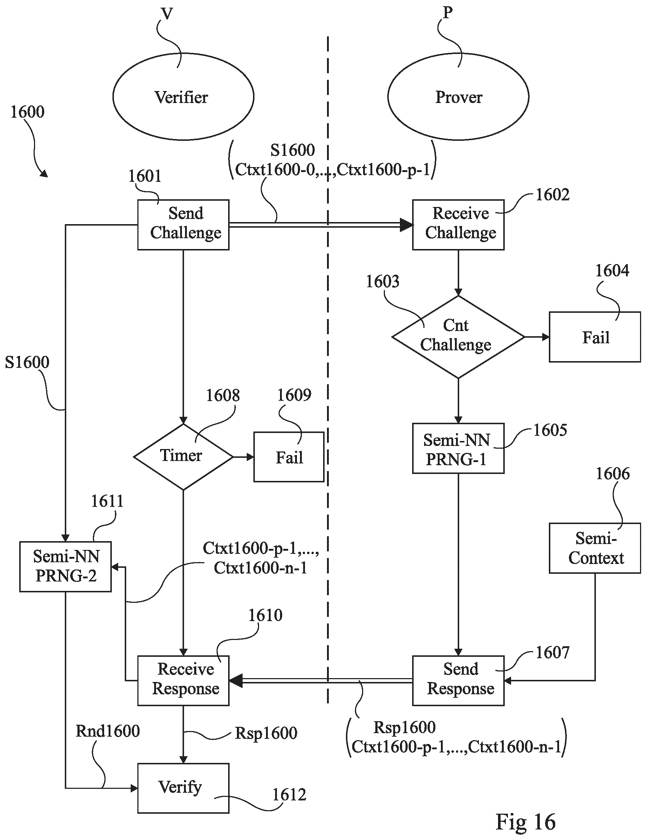

La figure 16 est un schéma bloc illustrant un quatrième exemple d'un mode de mise en oeuvre d'un procédé d'authentification 1600 permettant d'authentifier le dispositif prouveur P auprès du dispositif vérificateur V définis tous les deux en relation avec la figure 2.

Le procédé d'authentification 1600 est un procédé de type Vérificateur/Prouveur du type du procédé d'authentification 200 décrit en relation avec la figure 2 et du type du procédé d'authentification 1300 décrit en relation avec la figure 13. Les éléments communs aux procédés 200, 1300, et 1600 ne sont pas décrits de nouveau en détails ici. Seules les différences entre ces procédés sont mises en exergue.

Le procédé d'authentification 1600 utilise deux réseaux de neurones du type des réseaux de neurones 1501 et 1502 décrits en relation avec la figure 15.

A une étape initiale 1601 (Send Challenge), le procédé d'authentification 1600 commence, pour cela le dispositif vérificateur V génère une donnée "graine" S1600, ou donnée de génération S1600, et un premier groupe de données de contexte Ctxt1600-0, ..., Ctxt1600-p-1, du type de la partie Ctxt1501 ou Ctxt1502 décrite en relation avec la figure 15, pour l'envoyer au dispositif prouveur P. Dans l'exemple de la figure 13, le dispositif V envoie p données de contexte, p étant l'entier défini en relation avec la figure 15.

A une étape 1602 (Receive Challenge), successive à l'étape 1601, le dispositif prouveur P reçoit les données S1600 et Ctxt1600-0, ..., Ctxt1600-p-1 et peut commencer à mettre en oeuvre le procédé d'authentification de son côté.

A une étape 1603 (Cnt Challenge), le dispositif P peut vérifier si le couple de données S1600 et Ctxt1600-0, ..., Ctxt1600-n-1 ne lui a pas déjà été envoyé trop de fois, en utilisant un compteur. Cette étape est similaire à l'étape 403 décrite en relation avec la figure 4. Lorsque la valeur du compteur atteint une valeur limite, une étape suivante est une étape 1604 (Fail) où le dispositif P considère que le procédé 1600 n'a pas abouti. Si la valeur du compteur ne dépasse pas la valeur limite, l'étape suivante est une étape 1605 (Semi-NN PRNG-1).

A l'étape 1605, successive à l'étape 1603, le dispositif prouveur P utilise un réseau de neurones du type du réseau de neurones 1501 ou 1502 décrit en relation avec la figure 15, pour fournir, ou pour générer, une donnée de réponse Rsp1600 à partir des données S1600 et Ctxt1600-0, ..., Ctxt1600-p-1. Le réseau de neurones s'emploie ici à générer un nombre aléatoire à partir de la donnée "graine" S1600 et des données de contexte Ctxt1600-0, ..., Ctxt1600-p-1. Ainsi, la donnée de réponse Rsp1600 est une donnée binaire dont le nombre de valeurs n'est limité que par son format.

Plus particulièrement, si le dispositif P met en oeuvre un réseau de neurones du type du réseau de neurones 1501 décrit en relation avec la figure 15, le groupe de données de contexte envoyée par le dispositif V est la partie Ctxt1502 décrite en relation avec la figure 15. A l'inverse, si le dispositif P met en oeuvre un réseau de neurones du type du réseau de neurones 1502 décrit en relation avec la figure 15, le groupe de données de contexte envoyée par le dispositif V est la partie Ctxt1501 décrite en relation avec la figure 15.

A une étape 1606 (Semi-Context), le dispositif P prépare un groupe de données de contexte complémentaire au groupe de données de contexte qu'il a reçu de la part du dispositif V. Selon un exemple, si le dispositif P reçoit un groupe de données du type de la partie Ctxt1502, il prépare un groupe de données du type de la partie Ctxt1501. A l'inverse, si le dispositif P reçoit un groupe de données du type de la partie Ctxt1501, il prépare un groupe de données du type de la partie Ctxt1502. La préparation de ce groupe de données comprend, par exemple, l'extraction de ce groupe de données dans une mémoire du dispositif P. Selon un exemple, ce groupe de données peut être écrit "en dur", c'est-à-dire encodé, dans le réseau de neurones du dispositif P.

Le procédé 1600 pourrait comprendre une étape de chiffrement de la donnée de réponse Rsp1600 et du groupe de données de contexte comprenant, par exemple, les données Ctxt1600-p-1, ..., Ctxt1600-n-1, par exemple en utilisant un algorithme de chiffrement, un algorithme de signature, un algorithme de hachage, etc.

A une étape 1607 (Send Response), le dispositif P envoie la donnée de réponse Rsp1600 et le groupe de données de contexte comprenant, par exemple, les données Ctxt1600-p-1, ..., Ctxt1600-n-1, au dispositif V, ou, le cas échéant, la version chiffrée de ces données.

A une étape 1608 (Timer) mise en oeuvre suite à l'étape 1601, le dispositif V vérifie le temps de réponse du dispositif P en utilisant un minuteur. L'étape 1608 est similaire à l'étape 407 décrite en relation avec la figure 4. Lorsque la valeur du minuteur atteint une valeur limite, une étape suivante est une étape 1609 (Fail) où le dispositif V considère que le procédé 1600 n'a pas abouti. Si le dispositif V reçoit la donnée Rsp1600 et le groupe de données de contexte avant que le minuteur n'atteigne la valeur limite, l'étape suivante est une étape 1610 (Receive Response).

A l'étape 1610, successive à l'étape 1604, le dispositif vérificateur V reçoit la donnée de réponse Rsp1600 et le groupe de données de contexte du dispositif prouveur P. Si ces données été chiffrées, une étape de déchiffrement peut être mise en oeuvre ici.

A une étape 1611 (Semi-NN PRNG-2), le dispositif vérificateur met en oeuvre un réseau de neurones du type du réseau de neurones 1502, si le dispositif P met en oeuvre un réseau de neurones du type du réseau de neurones 1501, en utilisant la donnée "graine" Seed1600 et le groupe de données de contexte, par exemple les données de contexte Ctxt1600-p-1, ..., Ctxt1600-n-1, envoyé par le dispositif P. Cela permet au dispositif V de générer une donnée aléatoire Rnd1600.

A une étape 1611 (Verify), le dispositif vérificateur V utilise la donnée de réponse Rsp1600 et la donnée aléatoire Rnd1600 pour conclure sur l'authentification, ou non, du dispositif prouveur P. Pour cela, le dispositif V peut, par exemple, comparer la donnée de réponse Rsp1600 avec la donnée Rnd1600. Selon un autre exemple, à cette étape le dispositif V met en oeuvre une fonction de vérification prenant en entrée la donnée de réponse Rsp1600 et la donnée Rnd1600.

Un avantage de ce mode de réalisation est qu'il permet de complexifier encore plus la donnée de réponse fournie par le dispositif prouveur P. Cela rend donc le procédé d'authentification 1600 plus difficile à contourner.

Un autre avantage est que ce mode de réalisation permet de diversifier les réseaux de neurones implémentés dans les dispositifs P et V. Il est donc possible d'avoir plusieurs dispositifs P et V différents avec des réseaux de neurones différents. Cette diversification rend l'extraction des paramètres de réseaux plus difficile pour un attaquant.

Un autre avantage est qu'il permet de ne pas stocker de donnée résultat dans le dispositif V.

La figure 17 est est un schéma-bloc illustrant un mode de mise en oeuvre d'un procédé 1700 de préparation du procédé d'authentification 1600 décrit en relation avec la figure 16.

De manière générale, le procédé 1700 comprend un procédé d'apprentissage des réseaux de neurones utilisés par les dispositifs P et V, et un procédé de génération d'un groupe de données parmi lequel les données S1600 et Ctxt1600-0, ..., Ctxt1600-n-1 sont choisies. Le procédé 1700 comprend, en outre, la préparation des dispositifs V et P.

A une étape initiale 1701 (Train PRNG Model), un réseau de neurones de type générateur de nombres aléatoires ou pseudo-aléatoires est entrainé, par exemple, en utilisant les techniques décrites en relation avec la figure 14.

A une étape 1702 (Generate NN-1), un réseau de neurones NN-1 du type du réseau de neurones 1501 ou 1502 décrit en relation avec la figure 15 est généré à partir du réseau de neurones entrainé à l'étape 1701. Ce réseau de neurones peut alors être implanté dans un circuit ou un dispositif électronique.

A une étape 1703 (Prover), le dispositif prouveur P est équipé du circuit ou dispositif dans lequel est implanté ledit réseau de neurones NN-1, et aussi d'un moyen de stockage, par exemple une mémoire ou par un encodage direct dans le réseau de neurones NN-1, d'une partie des données de contexte.

A une étape 1704 (Generate NN-2), un réseau de neurones NN-2 du type du réseau de neurones 1502 ou 1501 décrit en relation avec la figure 15 est généré à partir du réseau de neurones entrainé à l'étape 1701. Ce réseau de neurones peut alors être implanté dans un circuit ou un dispositif électronique. Selon un mode de réalisation, le réseau de neurones NN-2 est complémentaire avec le réseau de neurones NN-1 généré à l'étape 1702.

A une étape 1705 (Verifier), le dispositif vérificateur V est équipé du circuit ou dispositif dans lequel est implanté ledit réseau de neurones NN-2, et aussi d'un moyen de stockage, par exemple une mémoire ou par un encodage direct dans le réseau de neurones NN-2, d'une partie des données de contexte différente de la partie des données de contexte stockée dans le dispositif prouveur P.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Procédé d'authentification (200 ; 400 ; 700 ; 900 ; 1300 ; 1600) d'un premier dispositif (P) auprès d'un deuxième dispositif (V), comprenant les étapes successives suivantes :

   - Envoyer, par ledit deuxième dispositif (V), audit premier dispositif (P), au moins une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) ;
- Utiliser, par ledit premier dispositif (P), un premier réseau de neurones pour fournir une deuxième donnée (Rsp200 ; Rsp400 ; Rsp700 ; Rsp900 ; Rsp1300 ; Rsp1600) à partir de ladite au moins une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) ;
- Envoyer, par ledit premier dispositif, ladite deuxième donnée (Rsp200 ; Rsp400 ; Rsp700 ; Rsp900 ; Rsp1300 ; Rsp1600) audit deuxième dispositif (V).

2. Dispositif électronique étant adapté à être le premier dispositif électronique (P) dans le procédé d'authentification (200 ; 400 ; 700 ; 900 ; 1300 ; 1600) du premier dispositif (P) auprès d'un deuxième dispositif (V), comprenant les étapes successives suivantes :

- Envoyer, par ledit deuxième dispositif (V), audit premier dispositif (P), au moins une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) ;
- Utiliser, par ledit premier dispositif (P), un premier réseau de neurones pour fournir une deuxième donnée (Rsp200 ; Rsp400 ; Rsp700 ; Rsp900 ; Rsp1300 ; Rsp1600) à partir de ladite au moins une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) ;
- Envoyer, par ledit premier dispositif, ladite deuxième donnée (Rsp200 ; Rsp400 ; Rsp700 ; Rsp900 ; Rsp1300 ; Rsp1600) audit deuxième dispositif (V).

3. Dispositif électronique étant adapté à être le deuxième dispositif électronique (V) dans le procédé d'authentification (200 ; 400 ; 700 ; 900 ; 1300 ; 1600) d'un premier dispositif (P) auprès du deuxième dispositif (V), comprenant les étapes successives suivantes :

- Envoyer, par ledit deuxième dispositif (V), audit premier dispositif (P), au moins une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) ;
- Utiliser, par ledit premier dispositif (P), un premier réseau de neurones pour fournir une deuxième donnée (Rsp200 ; Rsp400 ; Rsp700 ; Rsp900 ; Rsp1300 ; Rsp1600) à partir de ladite au moins une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) ;
- Envoyer, par ledit premier dispositif, ladite deuxième donnée (Rsp200 ; Rsp400 ; Rsp700 ; Rsp900 ; Rsp1300 ; Rsp1600) audit deuxième dispositif (V).

4. Procédé selon la revendication 1, ou dispositif selon la revendication 2 ou 3, dans lequel le premier réseau de neurones est contenu dans le premier dispositif et dans un circuit distinct d'une unité centrale de traitement du premier dispositif.

5. Procédé selon la revendication 1 ou 4, ou dispositif selon l'une quelconque des revendications 2 à 4, dans lequel ledit premier réseau de neurones est adapté à reconnaitre la présence d'une caractéristique dans ladite au moins une première donnée (Chall400), et ladite deuxième donnée (Rsp400) est une donnée binaire indiquant si ladite caractéristique est reconnue ou non.

6. Procédé ou dispositif selon la revendication 4 ou 5, dans lequel ladite au moins une première donnée (Chall400) est choisie par un premier groupe comprenant des troisième données prétraitées (Emb600) par ledit premier réseau de neurones.

7. Procédé ou dispositif selon la revendication 6, dans lequel ladite au moins une première donnée (Chall400) est choisie par un deuxième groupe comprenant des quatrième données prétraitées (Emb600) par ledit premier réseau de neurones, ledit deuxième groupe vérifiant la formule mathématique suivante :

[Math 3]

$$\mathbf{dist}(\mathbf{V0}, \mathbf{V'0}) \; \cong \; \mathbf{dist}\,(\mathbf{V1}, \mathbf{V'1}) \; \cong \; \mathbf{dist}\,(\mathbf{V0}, \mathbf{V1})$$

dans laquelle :

- V0 et V'0 sont des données prétraitées conduisant à la première valeur de la donnée de sortie ;
- V1 et V'1 sont des données prétraitées conduisant à la deuxième valeur de la donnée de sortie ;
- dist est une fonction permettant de calculer une distance dans un espace à plusieurs dimensions comprenant les données V0, V'0, V1 et V'1 ; et
- $\cong$ est un symbole représentant une égalité relative du type "de l'ordre de".

8. Procédé selon l'une quelconque des revendications 1, 4 à 7, ou dispositif selon l'une quelconque des revendications 2 à 7, dans lequel ledit premier réseau de neurones est adapté à classer ladite au moins une première donnée (Chall700) selon au moins trois catégories, et ladite deuxième donnée (Rsp700) indiquant de quelle catégorie fait partie ladite au moins une première donnée (Chall700).

9. Procédé selon l'une quelconque des revendications 1, 4 à 8, ou dispositif selon l'une quelconque des revendications 2 à 8, dans lequel ladite deuxième donnée (Rsp900) a été cachée dans ladite au moins une première donnée (Chall900), et
ledit premier réseau de neurones est adapté à extraire la deuxième donnée (Rsp900) à partir de ladite au moins une première donnée (Chall900).

10. Procédé ou dispositif selon la revendication 9, dans lequel ladite deuxième donnée (Rsp900) a été cachée dans ladite au moins une première donnée (Chall900) en utilisant au moins une technique de stéganographie mise en oeuvre par un deuxième réseau de neurones.

11. Procédé selon l'une quelconque des revendications 1, 4 à 10, ou dispositif selon l'une quelconque des revendications 2 à 10, dans lequel ledit premier réseau de neurones est adapté à générer ladite deuxième donnée (Rsp1300 ; Rsp1600) de façon aléatoire à partir d'au moins deux premières données comportant une cinquième donnée de génération (Seed1300 ; Seed1600) et au moins une sixième donnée de contexte (Ctxt1300-0, ..., Ctxt1300-n-1 ; Ctxt1300-0, ..., Ctxt1300-p-1).

12. Procédé ou dispositif selon la revendication 11, dans lequel ledit premier dispositif (P) envoie, en plus de ladite deuxième donnée (Rsp1600), au moins une septième donnée de contexte (Ctxt1600-p-1, ..., Ctxt1600-n-1) différente de la sixième donnée de contexte (Ctxt1600-0, ..., Ctxt1600-p-1),

ledit deuxième dispositif (V) étant adapté à générer une huitième donnée (Rnd1600) de façon aléatoire en utilisant ladite cinquième donnée de génération (Seed1600) et ladite au moins une septième donnée de contexte (Ctxt1600-p-1, ..., Ctxt1600-n-1),
ledit deuxième dispositif (V) utilisant la deuxième donnée (Rsp1600) et la huitième donnée (Rnd1600) pour vérifier si le premier dispositif (P) est authentifié ou non auprès du deuxième dispositif (V).

13. Procédé selon l'une quelconque des revendications 1, 4 à 12, ou dispositif selon l'une quelconque des revendications 2 à 12, dans lequel le procédé comprend, en outre, une étape de vérification (206 ; 410 ; 711 ; 911 ; 1311 ; 1612) de ladite deuxième donnée (Rsp200 ; Rsp400 ; Rsp700 ; Rsp900 ; Rsp1300 ; Rsp1600) par ledit deuxième dispositif (V) permettant d'indiquer si le premier dispositif (P) est authentifié ou non auprès du deuxième dispositif (V).

14. Procédé selon l'une quelconque des revendications 1, 4 à 13, ou dispositif selon l'une quelconque des revendications 2 à 12, dans lequel le procédé comprend, en outre, une étape de vérification (403 ; 703 ; 903 ; 1303 ; 1603) du nombre de fois qu'une première donnée (Chall200 ; Chall400 ; Chall700 ; Chall900 ; Seed1300, Ctxt1300-0, ..., Ctxt1300-n-1 ; Seed1600, Ctxt1300-0, ..., Ctxt1600-p-1) spécifique est fournie au premier dispositif (P).

15. Procédé selon l'une quelconque des revendications 1, 4 à 14, ou dispositif selon l'une quelconque des revendications 2 à 14, dans lequel le procédé comprend, en outre, une étape de vérification (407 ; 708 ; 908 ; 1308 ; 1608) du délai de réponse du premier dispositif (P), mise en oeuvre par ledit deuxième dispositif (V).

16. Procédé selon l'une quelconque des revendications 1, 4 à 15, ou dispositif selon l'une quelconque des revendications 2 à 15, dans lequel le procédé comprend, en outre, une étape de chiffrement (706 ; 906 ; 1306) de la deuxième donnée (Rsp200 ; Rsp400 ; Rsp700 ; Rsp900 ; Rsp1300 ; Rsp1600) avant son envoi au deuxième dispositif (V).

17. Procédé d'apprentissage d'un réseau de neurones d'un premier dispositif (P) pour la mise en oeuvre d'un procédé d'authentification selon l'une quelconque des revendications 1, 4 à 16.

18. Système comprenant un dispositif selon l'une quelconque des revendications 2 à 16.

19. Produit programme d'ordinateur comprenant des instructions de code de programme pour l'exécution des étapes du procédé (200 ; 400 ; 700 ; 900 ; 1300 ; 1600) selon l'une quelconque des revendications 1, 4 à 17 comme étant ledit premier dispositif (P), lorsque ledit programme est exécuté sur un ordinateur.

20. Produit programme d'ordinateur comprenant des instructions de code de programme pour l'exécution des étapes du procédé (200 ; 400 ; 700 ; 900 ; 1300 ; 1600) selon l'une quelconque des revendications 1, 4 à 15 comme étant ledit deuxième dispositif (V), lorsque ledit programme est exécuté sur un ordinateur.

Fig 1

Fig 2

Fig 3

Fig 4

500

501

Prepare
Data

502

Select
Model

503

Train
Classifier
Model

504

Pick Data
Sets

506

Implement
Model

505

Verifier

507

Prover

Fig 5

600

IN600

601

EMB600

602

OUT600

Fig 6

Fig 7

Fig 8

Fig 9

Fig 10

Fig 11

1201

1200

Prepare
Data

Train
Stegano
Model

1102

Implement
Encoder
Model

1206

Select
Challenge
Set

1205

Implement
Decoder
Model

1203

Verifier

1207

Prover

1204

Fig 12

Fig 13

1400

Train
PRNG
Model — 1401

Implement
PRNG
Model — 1402

Generate
Challenges

1404 —

1405 —

Verifier

Prover — 1403

Fig 14

Fig 16

Fig 15

Fig 17

Europäisches
Patentamt

European
Patent Office

Office européen
des brevets

**RAPPORT DE RECHERCHE EUROPEENNE**

Numéro de la demande

EP 25 18 5567

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/070534 A1 (BAILEY CHRISTOPHER EVERETT [CA] ET AL) 9 mars 2017 (2017-03-09) | 1-5,8, 13-20 | INV. G06F21/44 |
| A | * alinéa [0190] - alinéa [0280] * ----- | 6,7,9-12 | |
| A | US 2010/293376 A1 (COLON FRANCOIS [FR]) 18 novembre 2010 (2010-11-18) * alinéa [0053] - alinéa [0057] * ----- | 1-20 | |
| A | US 11 539 733 B1 (MCTEGGART RALPH [GB]) 27 décembre 2022 (2022-12-27) * colonne 8 - colonne 9 * ----- | 1-20 | |

DOMAINES TECHNIQUES
RECHERCHES (IPC)

G06F
H04L

Le présent rapport a été établi pour toutes les revendications

| Lieu de la recherche | Date d'achèvement de la recherche | Examinateur |
|---|---|---|
| Munich | 29 octobre 2025 | Chabot, Pedro |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 18 5567

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-10-2025

| Document brevet cité au rapport de recherche | Date de publication | Membre(s) de la famille de brevet(s) | Date de publication |
|---|---|---|---|
| US 2017070534 A1 | 09-03-2017 | AU 2016314061 A1 | 29-03-2018 |
| | | AU 2016315900 A1 | 29-03-2018 |
| | | AU 2016334816 A1 | 29-03-2018 |
| | | AU 2019232865 A1 | 10-10-2019 |
| | | AU 2019271890 A1 | 19-12-2019 |
| | | AU 2019271891 A1 | 19-12-2019 |
| | | AU 2019271892 A1 | 19-12-2019 |
| | | CA 2997583 A1 | 09-03-2017 |
| | | CA 2997585 A1 | 09-03-2017 |
| | | CA 2997597 A1 | 13-04-2017 |
| | | CN 108780479 A | 09-11-2018 |
| | | CN 108885659 A | 23-11-2018 |
| | | CN 108885666 A | 23-11-2018 |
| | | EP 3345099 A2 | 11-07-2018 |
| | | EP 3345117 A1 | 11-07-2018 |
| | | EP 3345349 A2 | 11-07-2018 |
| | | IL 257844 A | 30-04-2018 |
| | | IL 257849 A | 30-04-2018 |
| | | IL 257852 A | 30-04-2018 |
| | | SG 10201909133Y A | 28-11-2019 |
| | | US 2017070517 A1 | 09-03-2017 |
| | | US 2017070521 A1 | 09-03-2017 |
| | | US 2017070522 A1 | 09-03-2017 |
| | | US 2017070523 A1 | 09-03-2017 |
| | | US 2017070524 A1 | 09-03-2017 |
| | | US 2017070525 A1 | 09-03-2017 |
| | | US 2017070526 A1 | 09-03-2017 |
| | | US 2017070527 A1 | 09-03-2017 |
| | | US 2017070533 A1 | 09-03-2017 |
| | | US 2017070534 A1 | 09-03-2017 |
| | | US 2017134414 A1 | 11-05-2017 |
| | | US 2017339184 A1 | 23-11-2017 |
| | | US 2018191762 A1 | 05-07-2018 |
| | | US 2019149567 A1 | 16-05-2019 |
| | | WO 2017037542 A1 | 09-03-2017 |
| | | WO 2017037544 A2 | 09-03-2017 |
| | | WO 2017060778 A2 | 13-04-2017 |
| US 2010293376 A1 | 18-11-2010 | EP 2242229 A1 | 20-10-2010 |
| | | FR 2944667 A1 | 22-10-2010 |
| | | US 2010293376 A1 | 18-11-2010 |
| US 11539733 B1 | 27-12-2022 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **ZHANG, KEVIN ALEX** ; **CUESTA-INFANTE, AL-FREDO** ; **VEERAMACHANENI, KALYAN**. Stegano-GAN: High Capacity Image Steganography with GANs. *MIT EECS*, January 2019

- **VARSHA KISHORE** ; **XIANGYU CHEN** ; **YAN WANG** ; **BOYI LI** ; **KILIAN Q WEINBERGER**. Fixed Neural Network Steganography: Train the images, not the network. *ICLR 2022*, January 2022